(19) Europäisches Patentamt / European Patent Office / Office européen des brevets

(11) **EP 2 755 867 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(21) Anmeldenummer: **12758479.5**

(22) Anmeldetag: **12.09.2012**

(51) Int Cl.:
**B60R 16/023** (2006.01)     **G01C 21/16** (2006.01)
**G01C 25/00** (2006.01)     **G01S 19/49** (2010.01)

(86) Internationale Anmeldenummer:
**PCT/EP2012/067877**

(87) Internationale Veröffentlichungsnummer:
**WO 2013/037854 (21.03.2013 Gazette 2013/12)**

(54) **SENSORSYSTEM UMFASSEND EIN FUSIONSFILTER ZUR GEMEINSAMEN SIGNALVERARBEITUNG**

SENSOR SYSTEM COMPRISING A FUSION FILTER FOR COMMON SIGNAL PROCESSING

SYSTÈME CAPTEUR COMPRENANT UN FILTRE DE FUSION POUR UN TRAITEMENT DES SIGNAUX EN COMMUN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:
**12.09.2011 DE 102011082534
12.09.2011 DE 102011082535
12.09.2011 DE 102011082539
12.09.2011 DE 102011082548
12.09.2011 DE 102011082549
12.09.2011 DE 102011082551
12.09.2011 DE 102011082552
21.11.2011 DE 102011086710
02.05.2012 DE 102012207297**

(43) Veröffentlichungstag der Anmeldung:
**23.07.2014 Patentblatt 2014/30**

(73) Patentinhaber: **Continental Teves AG & Co. OHG**
**60488 Frankfurt (DE)**

(72) Erfinder:
• **STEINHARDT, Nico**
**60327 Frankfurt (DE)**
• **MARTIN, Jens**
**60486 Frankfurt am Main (DE)**

(74) Vertreter: **Wagner, Philipp et al**
**Conti Temic microelectronic GmbH**
**Intellectual Property**
**Sieboldstraße 19**
**90411 Nürnberg (DE)**

(56) Entgegenhaltungen:
**WO-A2-2005/062984     WO-A2-2007/143806
DE-A1-102006 029 148     DE-A1-102010 063 984
US-A1- 2009 222 204     US-A1- 2010 106 356
US-A1- 2010 253 602**

• **SCHLAILE C ET AL: "Using natural features for vision based navigation of an indoor-VTOL MAV", AEROSPACE SCIENCE AND TECHNOLOGY, ELSEVIER MASSON, FR, Bd. 13, Nr. 7, 1. Oktober 2009 (2009-10-01), Seiten 349-357, XP026737585, ISSN: 1270-9638, DOI: 10.1016/J.AST.2009.09.001 [gefunden am 2009-09-10]**
• **Oliver J Woodman: "An introduction to inertial navigation", , 1 August 2007 (2007-08-01), pages 1-37, XP055291911, Retrieved from the Internet: URL:https://www.cl.cam.ac.uk/techreports/U CAM-CL-TR-696.pdf [retrieved on 2016-07-28]**

EP 2 755 867 B1

**Beschreibung**

Die Erfindung betrifft ein Sensorsystem gemäß Oberbegriff von Anspruch 1 sowie dessen Verwendung in Kraftfahrzeugen, insbesondere in Automobilen.

Offenlegungsschrift DE 10 2010 063 984 A1 beschreibt ein Sensorsystem, umfassend mehrere Sensorelemente und eine Signalverarbeitungseinrichtung, wobei die Signalverarbeitungseinrichtung so ausgelegt ist, dass die Ausgangssignale der Sensorelemente gemeinsam ausgewertet werden.

In der DE 10 2006 029 148 A2 ist ein Verfahren zur Überprüfung einer inertialen Messeinheit von Fahrzeugen im stationären Zustand beschrieben, wobei die inertiale Messeinheit einen Beschleunigungssensor und einen Drehratensensor aufweist und die inertiale Messeinheit mit einer Navigationscomputer-Anordnung verbunden ist. Die Navigationscomputer-Anordnung weist eine Strapdown-Algorithmus-Einheit auf, die vom Beschleunigungssensor gelieferte translatorische Beschleunigungssignale und vom Drehratensensor gelieferte Drehratensignale als Eingangsdaten empfängt und verarbeitet, und einen Kalman-Filter aufweist, das die Eingangsdaten von der Strapdown-Algorithmus-Einheit empfängt und verarbeitet, und ein Modul aufweist, das die Eingangsdaten von der inertialen Messeinheit, von der Strapdown-Algorithmus-Einheit und von dem Kalman-Filter empfängt, Überprüft und das Ergebnis der Überprüfung ausgibt.

Der Erfindung liegt die Aufgabe zu Grunde, ein Sensorsystem vorzuschlagen, welches eine relativ hohe Genauigkeit bezüglich seiner Signalverarbeitung bietet bzw. ermöglicht und/oder welches für sicherheitskritische Anwendungen bzw. einen sicherheitskritischen Einsatz geeignet ist.

Diese Aufgabe wird gelöst durch das Sensorsystem gemäß Anspruch 1.

Das Fusionsfilter ist bevorzugt als Kalmanfilter ausgebildet, alternativ vorzugsweise als Partikelfilter, oder alternativ als Informationsfilter oder alternativ als "Unscented" Kalmanfilter.

Es ist bevorzugt, dass das Fusionsfilter so ausgebildet ist, dass der Fusionsdatensatz als Wert der wenigstens einen physikalischen Größe einen relativen Wert umfasst, insbesondere einen Offsetwert und/oder Änderungswert und/oder Korrekturwert und/oder Fehlerwert.

Es ist zweckmäßig, dass der die relativen Werte der jeweiligen physikalischen Größen des Fusionsdatensatzes Korrekturwerte sind, denen jeweils eine Streuungsinformation bzw. Streuung bzw. Streuungsmaß, insbesondere eine Varianz, als Information über deren Datenqualität zugeordnet sind.

Es ist bevorzugt, dass das Fusionsfilter so ausgebildet ist, dass der Wert wenigstens einer physikalischen Größe des Fusionsdatensatzes auf direkter oder indirekter Basis von Sensorsignalen mehrerer Sensorelemente berechnet wird, wobei diese Sensorelemente diese wenigstens eine physikalische Größe redundant in direkter oder indirekter Weise erfassen. Diese redundante Erfassung ist besonders bevorzugt direkte bzw. parallele Redundanz verwirklicht und/oder als analytische Redundanz verwirklicht, aus rechnerisch abgeleiteten bzw. hergeleiteten Größen/Werten und/oder Modellannahmen.

Das Fusionsfilter ist bevorzugt als Kaimanfilter ausgebildet, das iterativ wenigstens Prädiktionsschritte sowie Korrekturschritte durchführt und zumindest teilweise den Fusionsdatensatz bereitstellt. Insbesondere ist das Fusionsfilter als Error State Space Extended Sequential Kalman Filter ausgebildet, also als Kalman Filter, das besonders bevorzugt eine Linearisierung umfasst und in welchem Fehlerzustandsinformationen berechnet und/oder geschätzt werden und/oder welches sequentiell arbeitet und dabei die in dem jeweiligen Funktionsschritt der Sequenz verfügbaren Eingangsdaten verwendet/berücksichtigt.

Es ist zweckmäßig, dass das Sensorsystem eine Inertialsensoranordnung aufweist, umfassend wenigstens ein Beschleunigungssensorelement und zumindest ein Drehratensensorelement, und dass das Sensorsystem eine Strapdown-Algorithmus-Einheit umfasst, in welcher ein Strapdown-Algorithmus durchgeführt wird, mit dem wenigstens die Sensorsignale der Inertialsensoranordnung zu, insbesondere korrigierten, Navigationsdaten und/oder Fahrdynamikdaten verarbeitet werden, bezogen auf das Fahrzeug, in welchem das Sensorsystem angeordnet ist.

Es ist besonders bevorzugt, dass die Strapdown-Algorithmus-Einheit ihre berechneten Navigationsdaten und/oder Fahrdynamikdaten dem Fusionsfilter direkt oder indirekt bereitstellt.

Das Sensorsystem weist vorzugsweise eine Inertialsensoranordnung auf, welche so ausgebildet ist, dass sie zumindest die Beschleunigung entlang einer zweiten definierten Achse, insbesondere der Querachse des Fahrzeugs, und wenigstens die Drehrate um eine dritte definierte Achse, insbesondere der Hochachse des Fahrzeugs, erfassen kann, wobei die erste und die dritte definierte Achse ein Erzeugendensystem bilden, und dabei insbesondere senkrecht zueinander ausgerichtet sind,

wobei das Sensorsystem außerdem mindestens ein Raddrehzahlsensorelement, insbesondere zumindest oder genau vier Raddrehzahlsensorelemente aufweist, welche die Raddrehzahl eines Rades oder die Raddrehzahlen jeweils eines der Räder des Fahrzeugs erfassen und insbesondere zusätzlich die Drehrichtung des zugeordneten Rades des Fahrzeugs erfassen, in dem das Sensorsystem angeordnet ist,

wobei das Sensorsystem zusätzlich wenigstens ein Lenkwinkelsensorelement umfasst, welches den Lenkwinkel des Fahrzeugs erfasst und

wobei das Sensorsystem darüber hinaus ein Satellitennavigationssystem umfasst, welches insbesondere so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt.

Besonders bevorzugt ist die Inertialsensoranordnung so ausgebildet, dass sie zumindest die Beschleunigungen entlang einer ersten, einer zweiten und einer dritten definierte Achse und wenigstens die Drehraten um diese erste, um diese zweite und um diese dritte definierte Achse erfassen kann, wobei diese erste, zweite und dritte definierte Achse ein Erzeugendensystem bilden, und dabei insbesondere jeweils senkrecht zueinander ausgerichtet sind.

Es ist bevorzugt, dass die Inertialsensoranordnung ihre Sensorsignale der Strapdown-Algorithmus-Einheit bereitstellt und die Strapdown-Algorithmus-Einheit so ausgebildet ist,

dass sie zumindest

aus den Sensorsignalen der Inertialsensoranordnung sowie insbesondere wenigstens einer Fehlerzustandsinformation und/oder Varianz und/oder Information über die Datenqualität, die einem Sensorsignal oder einer physikalischen Größe zugeordnet ist und von dem Fusionsfilter bereitgestellt wird,

als Messgrößen und/oder Navigationsdaten und/oder Fahrdynamikdaten

mindestens korrigierte Beschleunigungen entlang der ersten, der zweiten und der dritten definierten Achse,

wenigstens korrigierte Drehraten um diese drei definierten Achsen,

wenigstens eine Geschwindigkeit bezüglich dieser drei definierten Achsen

sowie zumindest eine Positionsgröße

berechnet und/oder bereitstellt.

Es ist zweckmäßig, dass das Sensorsystem so ausgebildet ist, dass jeweils zumindest ein Sensorsignal und/oder eine physikalische Größe als direkte oder abgeleitete Größe der Inertialsensoranordnung und/oder der Strapdown-Algorithmus-Einheit,

der Raddrehzahlsensorelemente und des Lenkwinkelsensorelements, insbesondere indirekt über eine Fahrzeugmodelleinheit,

sowie des Satellitennavigationssystems, dabei insbesondere Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe,

dem Fusionsfilter bereitstellt und vom Fusionsfilter bei dessen Berechnungen berücksichtigt werden.

Es ist besonders bevorzugt, dass die Fahrzeugmodelleinheit so ausgebildet ist, dass aus den Sensorsignalen der Raddrehzahlsensorelemente und des Lenkwinkelsensorelements die Geschwindigkeit entlang der ersten definierten Achse, die Geschwindigkeit entlang der zweiten definierten Achse sowie die Drehrate um die dritte definierte Achse berechnet werden.

Es ist ganz besonders bevorzugt, dass die Fahrzeugmodelleinheit so ausgebildet ist, dass sie zur Berechnung ein Verfahren der kleinsten Fehlerquadrate zur Lösung eines überbestimmten Gleichungssystems, insbesondere als Least-Squared-Error-Verfahren bekannt, verwendet.

Es ist zweckmäßig, dass die Fahrzeugmodelleinheit so ausgebildet ist, dass sie bei ihrer Berechnung mindestens folgende physikalische Größen und/oder Parameter berücksichtigt

    a) den Lenkwinkel jedes Rades, insbesondere durch den Lenkwinkelsensor für die beiden Vorderräder erfasst, wobei die Modellannahme getroffen wird, dass der Lenkwinkel der Hinterräder gleich Null ist oder dass der Lenkwinkel der Hinterräder zusätzlich erfasst wird,
    b) die Raddrehzahl oder eine davon abhängige Größe jeden Rades,
    c) die Drehrichtung jeden Rades,
    d) der dynamische Halbmesser und/oder Raddurchmesser jeden Rades und
    e) die Spurbreite jeder Achse des Fahrzeugs und/oder den Radstand zwischen den Achsen des Fahrzeugs.

Die Signalverarbeitungseinrichtung ist vorzugsweise so ausgebildet, dass das Fusionsfilter den Fusionsdatensatz zu definierten Zeitpunkten berechnet und/oder bereitstellt und/oder ausgibt.

Das Fusionsfilter ist bevorzugt so ausgebildet, dass es den Fusionsdatensatz unabhängig von den Abtastraten und/oder Sensorsignalausgabezeitpunkten der Sensorelemente, insbesondere der Raddrehzahlsensorelemente und des Lenkwinkelsensorelements, und unabhängig von zeitlichen Signal- oder Messgrößen-/ oder Informationsausgabezeitpunkten des Satellitennavigationssystems, berechnet und/oder bereitstellt und/oder ausgibt.

Es ist zweckmäßig, dass die Signalverarbeitungseinrichtung so ausgebildet ist, dass im Zuge eines Funktionsschritts des Fusionsfilters stets, insbesondere asynchron, die neuesten, dem Fusionsfilter verfügbaren Informationen und/oder Signale und/oder Daten

der Sensorelemente, insbesondere der Raddrehzahlsensorelemente und des Lenkwinkelsensorelements, direkt oder indirekt, insbesondere mittels der Fahrzeugmodelleinheit und des Satellitennavigationssystems direkt oder indirekt, sequenziell aktualisiert und/oder in das Fusionsfilter aufgenommen werden und bei der Berechnung des zugeordneten Funktionsschritts des Fusionsfilters berücksichtigt werden.

Es ist bevorzugt, dass das Sensorsystem eine Stillstandserkennungseinheit aufweist, welche so ausgebildet ist, dass sie einen Stillstand des Fahrzeugs erkennen kann und im Fall eines erkannten Stillstands des Fahrzeugs zumindest dem Fusionsfilter Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen.

Es ist bevorzugt, dass die Signalverarbeitungseinrichtung eine erste Gruppe von Daten physikalischer Größen berechnet und/oder verwendet, deren Werte sich auf ein Fahrzeugkoordinatensystem beziehen und wobei die Signalverarbeitungseinrichtung zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit aufweist, mit welcher der Ausrichtungswinkel zwischen dem Fahrzeugkoordinatensystem und dem Weltkoordinatensystem berechnet wird, wobei der Ausrichtungswinkel zwischen dem Fahrzeugkoordinatensystem und dem Weltkoordinatensystem in der Ausrichtungsmodelleinheit berechnet wird zumindest auf Basis folgender Größen: die Geschwindigkeit bezüglich des Fahrzeugkoordinatensystems, die Geschwindigkeit bezüglich des Weltkoordinatensystems und insbesondere der Lenkwinkel.

Es ist zweckmäßig, dass die folgenden Begriffe synonym verwendet werden, also technisch umgesetzt dasselbe bedeuten: Offsetwert, Änderungswert, Korrekturwert und Fehlerwert.

Unter einer Fehlerzustandsinformation wird bevorzugt eine Fehlerinformation und/oder eine Fehlerkorrekturinformation und/oder eine Streuungsinformation und/oder eine Varianzinformation und/oder eine Genauigkeitsinformation verstanden.

Unter dem Begriff Varianz wird vorzugsweise der Begriff Streuung verstanden, wobei insbesondere im Fall eines allgemeinen Fusionsfilters, dieses jeweils eine Streuung bzw. einen Streuungswert jedem Wert einer physikalischen Größe des Fusionsfilters zuordnet, und im Fall eines Kalmanfilters als Fusionsfilters, jeweils eine Varianz jedem Wert einer physikalischen Größe des Fusionsfilters zuordnet wird/ist.

Es ist zweckmäßig, dass die erste, zweite und dritte definite Achse bezogen auf ein Koordinatensystem des Fahrzeugs, in dem das Sensorsystem implementiert ist, wie folgt definiert sind:

die erste definierte Achse entspricht der Längsachse des Fahrzeugs,
die zweite definierte Achse entspricht der Querachse des Fahrzeugs und
die dritte definierte Achse entspricht der Hochachse des Fahrzeugs. Diese drei Achsen bilden insbesondere ein kartesisches Koordinatensystem.

Es ist bevorzugt, dass das Fusionsfilter so ausgebildet ist, dass seine Daten, insbesondere die physikalischen Größen bzw. die Daten der physikalischen Größen des Fusionsdatensatzes, in stets konstant große Blöcke aufgeteilt sind oder werden, welche in beliebiger Reihenfolge im Fusionsfilter iterativ verarbeitet werden, das Fusionsfilter führt also bezüglich seiner Eingangsdaten ein sequentielles Update durch. Dabei ist das Fusionsfilter besonders bevorzugt so ausgebildet, dass die Filtergleichungen angepasst werden, so dass das rechnerische Ergebnis des sequentiellen Updates in jeden Schritt des Fusionsfilters ein Update, also eine Datenaktualisierung, für sämtliche Messgrößen der Eingangsdaten des Fusionsfilters ist.

Das Sensorsystem ist zweckmäßigerweise in einem Fahrzeug, insbesondere einem Kraftfahrzeug, besonders bevorzugt einem Automobil, angeordnet.

Das Sensorsystem ist bevorzugt so ausgebildet, dass Daten des Satellitennavigationssystems, insbesondere Positionsdaten, eine Zeitstempelinformation zugeordnet wird, welche im Wesentlichen den Messzeitpunkt dieser Daten beschreibt. Die Zeitstempelinformation des jeweiligen Datums des Satellitennavigationssystems wird gemeinsam mit diesem jeweiligen Datum dem Fusionsfilter bereitgestellt und bei der internen Berechnung im Fusionsfilter berücksichtigt.

Bevorzugt wird außerdem den Daten weiterer oder sämtlicher Sensorelemente und/oder der Inertialsensoranordnung ebenfalls eine solche Zeitstempelinformation zugeordnet, die ebenfalls mit dem jeweiligen Datum dem Fusionsfilter bereitgestellt wird und bei der internen Berechnung im Fusionsfilter berücksichtigt wird. Zweckmäßigerweise wird bezüglich der Daten des Satellitennavigationssystems die jeweilige Zeitstempelinformation von dem Satellitennavigationssystem selbst erzeugt.

Es ist bevorzugt, dass bei den zusätzlichen Zeitstempelinformationen der weiteren Sensorelemente und/oder der Inertialsensoranordnung die jeweilige Zeitstempelinformation von der Signalverarbeitungseinrichtung erzeugt wird, insbesondere in Abhängigkeit der Zeitmessung des Satellitennavigationssystems.

Vorzugsweise umfasst ein Funktionsschritt des Fusionsfilters wenigstens einen Prädiktionsschritt sowie einen Korrekturschritt. Das Fusionsfilter ist dabei iterativ ausgebildet und führt iterativ, nacheinander Funktionsschritte aus. Insbesondere werden innerhalb jedes Funktionsschritts des Fusionsfilters Daten bzw. Werte bzw. Signale eingelesen, also Eingangsdaten berücksichtigt, also auch Daten bzw. Werte bzw. Signale ausgegeben, also als Ausgangs-/ Ausgabedaten bereitgestellt.

Das Fusionsfilter ist vorzugsweise so ausgebildet, dass das Fusionsfilter mehrere Aktualisierungsschritte innerhalb eines Funktionsschritts durchführt, wobei diese Aktualisierungsschritte sich auf das Laden bzw. Verwenden bzw. Aktualisieren von Eingangsdaten bzw. -signalen bezieht. Das Fusionsfilter geht insbesondere sequentiell sämtliche Eingangsgrößen bzw. Eingangssignale durch und prüft jeweils ob neue Informationen/ Daten vorliegen. Falls ja werden diese in das Filter übernommen bzw. die Informationen/ Daten im Filter aktualisiert, falls nein bleibt der aktuelle Wert erhalten und das Filter prüft den nächsten Eingang bzw. die nächste Eingangsgröße bzw. das nächste Eingangssignal.

Die Strapdown-Algorithmus-Einheit stellt vorzugsweise zumindest absolute Werte physikalischer Größen bereit, insbesondere absolute Werte für die Beschleunigung, die Drehrate, die Geschwindigkeit, dabei jeweils bezogen auf die drei Achsen den Fahrzeug- und/oder Weltkoordinatensystem, sowie eine Position und den Ausrichtungswinkel. Die Werte zu diesen Größen werden dabei besonders bevorzugt alle von der Strapdown-Algorithmus-Einheit als korrigierte Werte/ Größen bereitgestellt.

Es ist zweckmäßig, dass die Inertialsensoranordnung das Fusionsfilter taktet und/oder triggert, insbesondere wird jeder Fusionsschritt, der vom Fusionsfilter ausgeführt wird, von der Inertialsensoranordnung bzw. wenigstens einem Ausgangssignal bzw. Ausgangsdatum getriggert.

Es ist bevorzugt, dass die Strapdown-Algorithmus-Einheit so ausgebildet ist, dass sie einen Startvektor physikalischer Größen aufweist und/oder einen Startwert der Position, insbesondere bezüglich des Starts des Sensorsystems, besonders bevorzugt nach jedem Einschalten des Sensorsystems. Diesen Startvektor und/oder diese Startposition erhält die Strapdown-Algorithmus-Einheit besonders bevorzugt über das Fusionsfilter von dem Satellitennavigationssystem.

Es ist zweckmäßig, dass die Daten des Fusionsfilters, insbesondere dessen Fusionsdatensatz, einen virtuellen Sensor abbilden bzw. einem solchen entsprechen.

Unter dem Begriff Sensorelemente werden bevorzugt die Raddrehzahlsensorelemente, das wenigstens eine Lenkwinkelsensorelement, die Sensorelemente der Inertialsensoranordnung und insbesondere zusätzlich auch das Satellitennavigationssystem verstanden.

Es ist bevorzugt, wenn allgemein eine Größe und/oder Wert hinsichtlich der drei definierten Achsen angegeben wird, dass dies bezüglich des Fahrzeugkoordinatensystems und/oder des Weltkoordinatensystems gemeint ist.

Es ist zweckmäßig, dass der Fusionsdatensatz, der Werte der physikalischen Größen umfasst, einen relativen Wert, beispielhaft einen Korrekturwert, auch Offsetwert genannt, umfasst und insbesondere der Strapdown-Algorithmus-Einheit bereitstellt. Beispielgemäß ergibt sich dieser jeweilige Korrekturwert jeweils aus den kumulierten Fehlerwerten bzw. Änderungswerten, die vom Fusionsfilter bereitgestellt werden.

Es ist bevorzugt, die Signalverarbeitungseinrichtung eine erste Gruppe von Daten physikalischer Größen berechnet und/oder verwendet, deren Werte sich auf ein Fahrzeugkoordinatensystem beziehen und wobei die Signalverarbeitungseinrichtung zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit aufweist, mit welcher der Ausrichtungswinkel zwischen dem Fahrzeugkoordinatensystem und dem Weltkoordinatensystem berechnet wird.

Das Fahrzeugkoordinatensystem und/oder das Weltkoordinatensystem sind vorzugsweise als drei-achsige kartesische Koordinatensysteme ausgebildet. Dabei ist das Fahrzeugkoordinatensystem insbesondere so definiert, dass die erste Achse die Längsachse des Fahrzeugs ist, die zweite Achse die Querachse des Fahrzeugs und die dritte Achse die Hochachse des Fahrzeugs.

Es ist bevorzugt, dass der Ausrichtungswinkel zwischen dem Fahrzeugkoordinatensystem und dem Weltkoordinatensystem in der Ausrichtungsmodelleinheit berechnet wird zumindest auf Basis folgender Größen:

die Geschwindigkeit bezüglich des Fahrzeugkoordinatensystems,
die Geschwindigkeit bezüglich des Weltkoordinatensystems und insbesondere der Lenkwinkel.

Die Signalverarbeitungseinrichtung umfasst vorzugsweise ein Sensorfusionsmodul, das ein Fusionsfilter aufweist, welches im Zuge der gemeinsamen Auswertung zumindest der Sensorsignale und/oder daraus abgeleiteter Signale der Sensorelemente einen definierten Fusionsdatensatz bereitstellt, wobei dieser Fusionsdatensatz jeweils Daten zu definierten physikalischen Größen aufweist, wobei der Fusionsdatensatz zu wenigstens einer physikalischen Größe einen Wert dieser physikalischen Größe und eine Information über deren Datenqualität umfasst und wobei das Fusionsfilter so ausgebildet ist, dass der Fusionsdatensatz als Wert der wenigstens einen physikalischen Größe einen relativen Wert umfasst, insbesondere einen Offsetwert und/oder Änderungswert und/oder Korrekturwert und/oder Fehlerwert. Es ist besonders bevorzugt, dass der die relativen Werte der jeweiligen physikalischen Größen des Fusionsdatensatzes Korrekturwerte sind und die Information über die Datenqualität der Wertephysikalischen Größen Varianzen sind.

Es ist zweckmäßig, dass das Sensorsystem eine Inertialsensoranordnung aufweist, umfassend wenigstens ein Beschleunigungssensorelement und zumindest ein Drehratensensorelement, und dass das Sensorfusionsmodul eine Strapdown-Algorithmus-Einheit umfasst, in welcher ein Strapdown-Algorithmus durchgeführt wird, mit dem wenigstens die Sensorsignale der Inertialsensoranordnung zu, insbesondere korrigierten, Navigationsdaten und/oder Fahrdynamikdaten verarbeitet werden, bezogen auf das Fahrzeug, in welchem das Sensorsystem angeordnet ist.

Es ist bevorzugt, dass der Ausrichtungswinkel zwischen dem Fahrzeugkoordinatensystem und dem Weltkoordinatensystem in der Ausrichtungsmodelleinheit berechnet wird zusätzlich zumindest auf Basis einer oder mehrerer der folgenden Größen: eine Ausrichtungsinformation des Fahrzeugs bezogen auf das Weltkoordinatensystem,

einige oder sämtliche der Korrekturwerte und/oder Varianzen des Fusionsfilters und/oder

die Beschleunigung des Fahrzeugs bezogen auf das Fahrzeugkoordinatensystem und/oder das Weltkoordinatensystem.

Es ist zweckmäßig, dass die Ausrichtungsmodelleinheit einige oder sämtliche der Ausgangsdaten und/oder Ausgangssignale der Strapdown-Algorithmus-Einheit zur Berechnung verwendet.

Es ist bevorzugt, dass die Ausrichtungsmodelleinheit so ausgebildet ist, dass sie zusätzlich zu dem Ausrichtungswinkel noch eine Information über die Datenqualität dieser Größe berechnet und bereitstellt, insbesondere die Varianz des Ausrichtungswinkels, wobei die Ausrichtungsmodelleinheit den Ausrichtungswinkel zwischen dem Fahrzeugkoordinatensystem und dem Weltkoordinatensystem sowie die Information über die Datenqualität dieser Größe dem Fusionsfilter bereitstellt und der Fusionsfilter diesen Ausrichtungswinkel bei seinen Berechnungen verwendet und besonders bevorzugt die die Information über die Datenqualität dieser Größe, insbesondere die Varianz des Ausrichtungswinkels, an die Strapdown-Algorithmus-Einheit weiterleitet.

Es ist zweckmäßig, dass die Ausrichtungsmodelleinheit so ausgebildet ist, dass sie zusätzlich zu dem Ausrichtungswinkel noch eine Information über die Datenqualität dieser Größe berechnet und bereitstellt, insbesondere die Varianz des Ausrichtungswinkels, wobei der Ausrichtungswinkel der Strapdown-Algorithmus-Einheit bereitgestellt wird und/oder in dieser mit dem Ausgangswert der Ausrichtungsmodelleinheit überschrieben wird und dass die Information über die Datenqualität dieser Größe, insbesondere die Varianz des Ausrichtungswinkels, dem Fusionsfilter bereitgestellt wird und/oder in diesem mit dem Ausgangswert der Ausrichtungsmodelleinheit überschrieben wird.

Das Sensorsystem umfasst vorzugsweise ein Satellitennavigationssystem, welches so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und dem Fusionsfilter bereitstellt und der Fusionsfilter diese Größen bei seinen Berechnungen verwendet.

Es ist bevorzugt, dass die Ausrichtungsmodelleinheit so ausgebildet ist, dass sie bei ihren Berechnungen wenigstens eine oder mehrere oder sämtliche der folgenden Modellannahmen berücksichtigt:

die Gesamtgeschwindigkeit des Fahrzeugs bezüglich zumindest seiner Längs- und/oder Querachse ist größer als Null,

die durchschnittliche Geschwindigkeit des Fahrzeugs in Richtung/ entlang seiner Hochachse ist gleich Null,

es tritt kein Schräglauf der Reifen auf und/oder das Fahrzeug folgt im Wesentlichen ohne Abweichungen seinen Radlenkwinkeln.

Es ist zweckmäßig, dass der Ausrichtungswinkel zwischen dem Fahrzeugkoordinatensystem und dem Weltkoordinatensystem in der Ausrichtungsmodelleinheit berechnet wird zusätzlich zumindest auf Basis einer oder mehrerer der folgenden Größen: die Raddrehzahlen von Raddrehzahlsensorelementen des Fahrzeugs sowie den Lenkwinkel oder die berechnet Radwinkel, wobei mit den Raddrehzahlen und dem Lenkwinkel oder den Radwinkeln über Differenzbildung die Drehrate des Fahrzeugs um dessen Hochachse bestimmt wird und/oder

die Drehrate des Fahrzeugs um dessen Hochachse bezogen auf das Fahrzeugkoordinatensystem, bereitgestellt von der Strapdown-Algorithmus-Einheit.

Es ist bevorzugt, dass der Ausrichtungswinkel zwischen dem Fahrzeugkoordinatensystem und dem Weltkoordinatensystem in der Ausrichtungsmodelleinheit berechnet wird zusätzlich zumindest auf Basis einer oder mehrerer der folgenden Größen: eine Ausrichtungsinformation des Fahrzeugs bezogen auf das Weltkoordinatensystem,

einige oder sämtliche der Korrekturwerte und/oder Varianzen des Fusionsfilters,

eine Positionsinformation des Fahrzeugs bezogen auf das Fahrzeugkoordinatensystem und/oder das Weltkoordinatensystem und/oder

die Beschleunigung des Fahrzeugs bezogen auf das Fahrzeugkoordinatensystem und/oder das Weltkoordinatensystem.

Die Ausrichtungsmodelleinheit ist vorzugsweise so ausgebildet, dass wenigstens eine der folgenden Randbedingungen für die Modellgültigkeit bei jeder Ausführung geprüft werden und bei Nichterfüllung die Ergebnisse verworfen werden:

- Die Winkelinkremente müssen ausreichend klein sein bzw. begrenzt werden, um mit kleinem Fehler linearisierbar zu sein (Eulerwinkel)
- Beschleunigungen und kinematische Verzwängungen der Achsen durch große Lenkeinschläge müssen ausreichend klein sein, damit der Momentanpol der Bewegung konstant ist.

Die Ausrichtungsmodelleinheit ist zweckmäßigerweise so ausgebildet, dass sie wenigstens eine der folgenden Operationen und/oder Schritte durchführt:

- Miteinbeziehung von Raddrehzahlmessungen erlaubt über Differenzbildung die Bestimmung der Soll-Drehrate um die Hochachse, welche zusammen mit der Ist-Drehrate aus der Strapdown-Algorithmus-Einheit eine zusätzliche Messgröße liefert.
- Direkte Korrektur der Verdrehung bzw. des Ausrichtungswinkels in der Strapdown-Algorithmus-Einheit zwischen fahrzeugfesten und Navigationskoordinaten bzw. zwischen Fahrzeugkoordinatensystem und dem Weltkoordinatensystem bei großen Abweichungen unter Verwendung zumindest einer oder alle der Eulerschen' Gleichungen.

Es ist bevorzugt, dass die erste, die zweite und die dritte definierte Achse ein Erzeugendensystem bilden, und dabei insbesondere senkrecht zueinander ausgerichtet sind.

Die Fahrzeugmodelleinheit ist vorzugsweise so ausgebildet, dass sie zur Berechnung ein Verfahren der kleinsten Fehlerquadrate zur Lösung eines überbestimmten Gleichungssystems, insbesondere als Least-Squared-Error-Verfahren bekannt, verwendet.

Es ist bevorzugt, dass jeweils eins der Raddrehzahlsensorelemente jedem Rad des Fahrzeugs zugeordnet ist, wobei die Fahrzeugmodelleinheit so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das wenigstens eine Lenkwinkelsensorelement für die eine oder jeweils für die mehreren gelenkten/ lenkbaren Achsen und/oder durch zumindest eine Modellannahme für eine oder mehrere ungelenkte/ nicht lenkbare Achsen, die Geschwindigkeitskomponenten und/oder die Geschwindigkeit, jedes Rades, entlang/bezüglich der ersten und der zweiten definierten Achse direkt oder indirekt berechnet, wobei aus diesen Geschwindigkeitskomponenten bezogen auf die jeweiligen Räder und/oder den Geschwindigkeiten jeweils bezüglich der ersten und zweiten definierten Achse der zugeordneten Räder, die Geschwindigkeit entlang einer ersten definierten Achse, die Geschwindigkeit entlang einer zweiten definierten Achse sowie die Drehrate um eine dritte definierte Achse berechnet wird.

Es ist zweckmäßig, dass das Sensorsystem vier Raddrehzahlsensorelemente aufweist, wobei jeweils eins der Raddrehzahlsensorelemente jedem Rad des Fahrzeugs zugeordnet ist, wobei die Fahrzeugmodelleinheit so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das Lenkwinkelsensorelement für die Vorderräder und aus einer Modellannahme oder wenigstens mittels eines weiteren Lenkwinkelsensorelements für die Hinterräder, die Geschwindigkeitskomponenten und/oder die Geschwindigkeit, jedes Rades, entlang/bezüglich der ersten und der zweiten definierten Achse direkt oder indirekt berechnet, wobei aus diesen acht Geschwindigkeitskomponenten und/oder den vier Geschwindigkeiten jeweils bezüglich der ersten und zweiten definierten Achse, die Geschwindigkeit entlang einer ersten definierten Achse, die Geschwindigkeit entlang einer zweiten definierten Achse sowie die Drehrate um eine dritte definierte Achse berechnet wird.

Es ist bevorzugt, dass der Lenkwinkel jeden Rades ermittelt bzw. berechnet wird, aus einem Lenkradwinkelsensorelement, also einem Sensorelement, welches den Fahrerwunsch-gemäßen Lenkwinkel erfasst, und einer Information über die Lenkungsübersetzungs-Kennlinie, welche insbesondere in der Fahrzeugmodelleinheit oder in einem anderen Teil der Signalverarbeitungseinrichtung gespeichert ist.

Es ist zweckmäßig, dass die Fahrzeugmodelleinheit so ausgebildet ist, dass sie bei ihrer Berechnung mindestens folgende physikalische Größen und/oder Parameter berücksichtigt

a) den Lenkwinkel jedes Rades, insbesondere durch den Lenkwinkelsensor für die beiden Vorderräder erfasst, wobei die Modellannahme getroffen wird, dass der Lenkwinkel der Hinterräder bekannt ist, insbesondere ist der Lenkwinkel der Hinterräder gleich Null oder der Lenkwinkel der Hinterräder wird zusätzlich erfasst,
b) die Raddrehzahl oder eine davon abhängige Größe jeden Rades,
c) die Drehrichtung jeden Rades,
d) der dynamische Halbmesser und/oder Raddurchmesser jeden Rades oder eine davon abgeleitete Größe als Parameter, welcher insbesondere als konstanter, dem Modell bekannter Wert berücksichtigt wird oder geschätzt und/oder berechnet wird, und
e) die Spurbreite jeder Achse des Fahrzeugs und/oder den Radstand zwischen den Achsen des Fahrzeugs.

Besonders bevorzugt ist die Fahrzeugmodelleinheit so ausgebildet, dass sie bei ihrer Berechnung mindestens eine der folgenden physikalische Größen und/oder Parameter berücksichtigt

f) den Schräglaufwinkel jeden Rades, insbesondere aus der Querbeschleunigung, also der Beschleunigung in Richtung der zweiten definierten Achse, berechnet und/oder
g) den Radschlupf, insbesondere aus Radkräften und/oder Beschleunigungen der jeden Rades berechnet.

Es ist bevorzugt, dass die Signalverarbeitungseinrichtung eine Reifenparameterschätzungseinheit umfasst, welche so ausgebildet ist, dass sie zumindest den Halbmesser, insbesondere den dynamischen Halbmesser, jeden Rades oder eine davon abhängige oder abgeleitete Größe berechnet und/oder schätzt und der Fahrzeugmodelleinheit als zusätzliche Eingangsgröße bereitstellt.

Besonders bevorzugt ist die Reifenparameterschätzungseinheit so ausgebildet, dass sie zusätzlich die Schräglaufsteifigkeit und

die Schlupfsteifigkeit bzw. Längsschlupfsteifigkeit jeden Rades oder eine davon abhängige oder abgeleitete Größe berechnet und/oder schätzt und der Fahrzeugmodelleinheit als zusätzliche Eingangsgröße bereitstellt, wobei die Reifenparameterschätzungseinheit so ausgebildet ist, dass sie insbesondere ein im Wesentlichen lineares Reifenmodell zur Berechnung der Rad-/Reifengrößen verwendet.

Zweckmäßigerweise ist die Reifenparameterschätzungseinheit so ausgebildet, dass sie als Eingangsgrößen die Raddrehzahlen und den Lenkwinkel erhält, zumindest teilweise oder vollständig die Ausgangsgrößen bzw. -werte der Strapdown-Algorithmus-Einheit, insbesondere die von ihr bereitgestellten Varianzen zusätzlich zu den Werten der physikalischen Größen, sowie die Varianzen des Fusionsfilters, zu den physikalischen Größen, welche die Eingangsgrößen der Reifenparameterschätzungseinheit sind.

Es ist bevorzugt, dass die Fahrzeugmodelleinheit so ausgebildet ist, dass sie zu jeder ihrer drei berechneten Größen der Geschwindigkeit entlang einer ersten definierten Achse, der Geschwindigkeit entlang einer zweiten definierten Achse sowie der Drehrate um eine dritte definierte Achse,

eine Information über die Datenqualität berechnet und als zusätzliche Ausgabegröße bereitstellt, insbesondere jeweils eine Varianz.

Es ist zweckmäßig, dass die Fahrzeugmodelleinheit so ausgebildet ist, dass sie auf Basis der berechneten Varianzen die Gültigkeit ihrer eigenen Ausgabegrößen bewertet, und dabei insbesondere die jeweilige Varianz der Geschwindigkeit entlang der ersten und entlang der zweiten definierten Achse sowie der Drehrate um die dritte definierte Achse bei der Bewertung der Gültigkeit der eigenen Ausgabegrößen berücksichtig.

Besonders bevorzugt ist die Fahrzeugmodelleinheit so ausgebildet, dass sie die jeweilige Varianz ihrer drei Ausgabegrößen bezüglich der Überschreitung eines oder jeweils eines definierten Grenzwerts prüft, wobei im Fall der Überschreitung einer oder mehrerer der Varianzen keine Gültigkeit der aktuellen Ausgabegrößen der Fahrzeugmodelleinheit gegeben ist.

Es ist bevorzugt, dass die Fahrzeugmodelleinheit und/oder die Reifenparameterschätzungseinheit so ausgebildet sind, dass diese zumindest eine Linearisierung umfassen. Diese Linearisierung wird insbesondere nur durchgeführt bzw. weist den Randparameter auf, dass die Gesamtbeschleunigung des Fahrzeugs, also die Beschleunigung bezüglich aller drei definierter Achsen, betraglich kleiner als 5 m/s$^2$ ist.

Es ist zweckmäßig, dass die erste, zweite und dritte definite Achse bezogen auf ein Koordinatensystem des Fahrzeugs, in dem das Sensorsystem implementiert ist, wie folgt definiert sind:

die erste definierte Achse entspricht der Längsachse des Fahrzeugs,
die zweite definierte Achse entspricht der Querachse des Fahrzeugs und
die dritte definierte Achse entspricht der Hochachse des Fahrzeugs. Diese drei Achsen bilden insbesondere ein kartesisches Koordinatensystem, insbesondere ein Fahrzeugkoordinatensystem.

Es ist bevorzugt, dass die Fahrzeugmodelleinheit so ausgebildet ist, dass sie eine direkte oder indirekte Messung der Radlasten und/oder Radaufstandskräfte durchführt oder unterstützt und diese wenigstens Größe als Ausgangsgröße bzw.

Ausgabegröße bereitstellt.

Es ist zweckmäßig, dass die Fahrzeugmodelleinheit so ausgebildet ist, dass sie die Modellierung einer Radaufhängung, hinsichtlich eines kinematischen und/oder dynamischen Modells, umfasst, wodurch unter Berücksichtigung dieser Modellierung ein Lenkwinkel mit gesteigerter Genauigkeit berechnet wird bzw. werden kann. Dieser Lenkwinkel bezieht sich insbesondere auf den Lenkwinkel jeden Rades, der jeweils zur weiteren Berechnung der Ausgabegrößen bzw. Ausgangsgrößen der Fahrzeugmodelleinheit genutzt wird.

Der Lenkwinkel der Hinterräder wird zweckmäßigerweise erfasst über wenigstens ein zusätzliches Hinterradlenkwinkelsensorelement. Insbesondere zusätzlich oder alternativ vorzugsweise stellt die Aktorik einer Hinterachslenkung den Lenkwinkel der Räder der Hinterachse bereit.

Die Signalverarbeitungseinrichtung des Sensorsystems umfasst außerdem vorzugsweise ein Fusionsfilter. Das Fusionsfilter stellt im Zuge der gemeinsamen Auswertung zumindest der Sensorsignale und/oder daraus abgeleiteter Signale der Sensorelemente, also der Odometrie, und insbesondere zusätzlich der Ausgangssignale eines Satellitennavigationssystems und/oder daraus abgeleiteter Signale einen definierten Fusionsdatensatz bereit. Dieser Fusionsdatensatz weist jeweils Daten zu definierten physikalischen Größen auf, wobei der Fusionsdatensatz zu wenigstens einer physikalischen Größe einen Wert dieser physikalischen Größe und eine Information über deren Datenqualität umfasst, wobei diese Information über die Datenqualität beispielgemäß als Varianz ausgeprägt ist.

Vorzugsweise umfasst der Fusionsdatensatz als Wert der wenigstens einen physikalischen Größe einen relativen Wert, beispielhaft einen Korrekturwert, auch Offsetwert oder Änderungswert oder Fehlerwert genannt.

Die relativen Werte der jeweiligen physikalischen Größen des Fusionsdatensatzes sind also zweckmäßigerweise Korrekturwerte und Varianzen.

Die Werte der physikalischen Größen des Fusionsdatensatzes werden bevorzugt auf direkter bzw. indirekter Basis der Sensorsignale der Sensorelemente und des Satellitennavigationssystems berechnet, wobei wenigstens einige Größen, beispielsweise die Geschwindigkeit und die Position des Fahrzeugs bezüglich der Fahrzeugkoordinaten redundant erfasst werden und verwertet werden.

Das Fusionsfilter ist zweckmäßigerweise als Error State Space Extended Sequential Kalman Filter ausgebildet, also als Kalman Filter, das insbesondere eine Linearisierung umfasst und in welchem die Korrekturwerte berechnet und/oder geschätzt werden und welches sequentiell arbeitet und dabei die in dem jeweiligen Funktionsschritt der Sequenz verfügbaren Eingangsdaten verwendet/berücksichtigt.

Die Fahrzeugmodelleinheit stellt ihre Ausgabegrößen bzw. Ausgangsdaten, also wenigstens die Geschwindigkeit entlang einer ersten definierten Achse, die Geschwindigkeit entlang einer zweiten definierten Achse sowie die Drehrate um eine dritte definierte Achse bevorzugt dem Fusionsfilter bereit, welches diese Ausgabegrößen bzw. Ausgangsdaten der Fahrzeugmodelleinheit bei ihren Berechnungen, also den Berechnungen des Fusionsfilters, berücksichtigt bzw. verwendet.

Der dynamische Halbmesser jeden Rades bzw. der dynamische Reifenhalbmesser $r_{dyn}$ ist bevorzugt wie folgt definiert: Effektiv zurückgelegte Strecke bei einer Reifenumdrehung. Diese entspricht nicht dem Radius des Reifens, da sich durch Einfederung unter Last der Reifenradius effektiv verkleinert. Einflussgrößen, die den Reifenhalbmesser auch während einer Fahrt verändern können, sind z.B. Fahrgeschwindigkeit, Luftdruck und Temperatur.

Die Größe Längsschlupf $\lambda$ ist zweckmäßigerweise wie folgt definiert: Unter Längskrafteinfluss entsteht durch die Verformung der Profilelemente des Reifens, ohne Berücksichtigung eines Gleitens des Reifens auf der Straße, eine Schlupfbewegung. Diese hat zur Folge, dass sich der Reifen, abhängig von der Längskraft, schneller oder langsamer dreht, als dies über den Reifenhalbmesser zu erwarten wäre. Wie stark dieser Effekt ausgeprägt ist, wird hauptsächlich von der Gummimischung und dem Reifentyp beeinflusst, und wird durch die Längsschlupfsteifigkeit charakterisiert:

$$c_\lambda = \frac{F_x}{\lambda}$$

Der Schräglauf bzw. Schräglaufwinkel $\alpha$ ist vorzugsweise wie folgt definiert: Ähnlich wie beim Längsschlupf verursachen Seitenkräfte, senkrecht zur Rollrichtung, durch die Gummielastizität eine Seitwärtsbewegung des Reifens. Dieser Zusammenhang wird durch die Schräglaufsteifigkeit charakterisiert: $c_\alpha = \frac{F_y}{\alpha}$

Zur Kompensation dieser Störgrößen wird von der Fahrzeugmodelleinheit bevorzugt auf ein lineares Reifenmodell der Reifenparameterschätzungseinheit zurückgegriffen bzw. in die Berechnungen mit einbezogen. Dieses beschränkt sich insbesondere auf Beschleunigungen bzw. Gesamtbeschleunigungen des Fahrzeugs $< 5\,\frac{m}{s^2}$. In diesem Bereich wird besonders bevorzugt angenommen, insbesondere als Modellannahme für die Berechnung, dass der Zusammenhang zwischen Längsschlupf und Schräglauf und den zugehörigen Kräften linear ist, und dass die übertragbaren Kräfte linear mit der Aufstandskraft $F_N$ bzw. Normalkraft auf den Reifen steigen. Dies erlaubt durch Kürzen der Fahrzeugmasse eine Normierung der Größen auf Beschleunigungen. Hierbei sind zweckmäßigerweise die Fahrzeugmassen und Beschleunigungen auf einzelne Räder bezogen, jedoch als statisch verteilt angenommen:

$$r_{dyn} = \frac{2\pi \cdot \Delta\varphi_{Rad}}{s_{x,absolut,Reifen}}$$

$$\lambda = \frac{F_x}{F_N \cdot c_\lambda} = \frac{m_{Fzg} \cdot a_{x,Fzg}}{m_{Fzg} \cdot g \cdot c_\lambda} = \frac{a_{x,Fzg}}{g \cdot c_\lambda}$$

$$\alpha = \frac{F_y}{F_N \cdot c_\alpha} = \frac{m_{Fzg} \cdot a_{y,Fzg}}{m_{Fzg} \cdot g \cdot c_\alpha} = \frac{a_{y,Fzg}}{g \cdot c_\alpha}$$

Dabei gilt vorzugsweise:

$\Delta\varphi_{Rad}$: Aus Wheelticks gemessener Drehwinkel des Rades

$s_{x,absolut,Reifen}$: Tatsächlich über der Straße zurückgelegte Strecke

$g$: Erdbeschleunigung

Daraus folgt für die zurückgelegten Strecken bevorzugt:

$$\Delta_{x,Rad} = \frac{2\pi \cdot \Delta\varphi_{Rad}}{r_{dyn}} \cdot \frac{1-\lambda_a}{1+\lambda_b}$$

$$\Delta_{y,Rad} = \Delta_{x,Rad} \cdot \tan\alpha$$

Dabei gilt vorzugsweise:

$\lambda_a$: Antriebsschlupf beim Beschleunigen.

$\lambda_a$: Bremsschlupf beim Verzögern

Beispielgemäß ist daher, die jeweils in der Fahrsituation nicht zutreffende Schlupfgröße = 0.

Da die verwendeten Beschleunigungen aus der Navigationsrechnung bekannt sind, lässt sich vorzugsweise bei bekanntem Reifenhalbmesser und bekannter Schräglauf- und Längsschlupfsteifigkeit die tatsächliche ebene Bewegung des Fahrzeuges über der Fahrbahn modellbasiert abschätzen. Über den gemessenen Lenkradwinkel und die bekannte Lenkübersetzung wird eine mögliche Verdrehung von Reifenkoordinaten relativ zu den Fahrzeugkoordinaten zweckmäßigerweise berücksichtigt. Die Strecken und Geschwindigkeiten der einzelnen Räder werden bevorzugt wie folgt in der Fahrzeugmodelleinheit berechnet:

- Berechnung von Beschleunigungen und Drehraten im Fahrzeugschwerpunkt
- Transformation auf Reifenkoordinaten
- Berechnung der Geschwindigkeiten / Strecken unter Verwendung des Reifenmodells und der Raddrehimpulse bzw. Raddrehzahlen
- Rücktransformation in Fahrzeugkoordinaten

Vorzugsweise stehen nach Abschluss dieser Schritte pro Rad zwei Messgrößen, ($\Delta X_{Rad}$, $\Delta Y_{Rad}$ in Fahrzeugkoordinaten), also insgesamt acht Messwerte zur Verfügung.

Es ist bevorzugt, dass die Reifenparameterschätzungseinheit so ausgebildet ist, dass sie ein Verfahren zum Schätzen von Reifenparametern für ein Fahrzeug durchführt, umfassend die folgenden Schritte:

- Messen einer Referenzbewegung des Fahrzeuges;
- Modellieren einer Modellbewegung des Fahrzeuges basierend auf einem von den zu schätzenden Reifenparametern befreiten Modell; und
- Schätzen der Reifenparameter des Fahrzeuges basierend auf einer Gegenüberstellung der Referenzbewegung und der Modellbewegung.

Das Verfahren umfasst insbesondere zusätzlich folgenden Schritt:

- Erfassen der realen Geschwindigkeit des Fahrzeuges an Radaufstandspunkten des Fahrzeuges.

Es ist bevorzugt, dass das Verfahren folgenden Schritt umfasst:

- Aufstellen des von den zu schätzenden Reifenparametern befreiten Modells basierend auf angenäherten Reifenparametern.

Und insbesondere den weiteren Schritt:

- Verwenden der geschätzten Reifenparameter als angenäherte Reifenparameter in dem Modell, zum Schätzen neuer Reifenparameter.

Zweckmäßigerweise umfasst das Verfahren folgende Schritte:

- Erfassen einer Varianz der Referenzbewegung, und
- Schätzen der Reifenparameter des Fahrzeuges basierend auf der erfassten Varianz.

Das Verfahren ist vorzugsweise weitergebildet, dadurch, dass die geschätzten Reifenparameter des Fahrzeuges als gültig betrachtet werden, wenn die Referenzbewegung und/oder die Modellbewegung einen bestimmten Wert überschreiten.

Das Verfahren umfasst zweckmäßigerweise den Schritt:

- Gegenüberstellen der Referenzbewegung und der Modellbewegung basierend auf einem Beobachter.

Bezüglich des Verfahrens in der Reifenparameterschätzungseinheit der Beobachter bevorzugt ein Kalman-Filter.

Es ist bevorzugt, dass die Signalverarbeitungseinrichtung ein Fusionsfilter aufweist, welches im Zuge der gemeinsamen Auswertung zumindest der Sensorsignale und/oder daraus abgeleiteter Signale der Sensorelemente einen definierten Fusionsdatensatz bereitstellt, wobei dieser Fusionsdatensatz jeweils Daten zu definierten physikalischen Größen aufweist, wobei der Fusionsdatensatz zu wenigstens einer physikalischen Größe einen Wert dieser physikalischen Größe und eine Information über deren Datenqualität umfasst.

Es ist bevorzugt, dass die Signalverarbeitungseinrichtung so ausgebildet ist, dass den Messdaten physikalischer Größen jeweils eine Zeitinformation zugeordnet wird, welche eine Information über den Zeitpunkt der jeweiligen Messung direkt oder indirekt umfasst, wobei die Signalverarbeitungseinrichtung diese Zeitinformation zumindest bei der Erzeugung des Fusionsdatensatzes in dem Fusionsfilter berücksichtigt.

Das Sensorsystem ist zweckmäßigerweise in einem Fahrzeug, insbesondere einem Kraftfahrzeug, besonders bevorzugt einem Automobil, angeordnet.

Es ist bevorzugt, dass das Fusionsfilter so ausgebildet ist, dass nacheinander Funktionsschritte durchführt werden, denen jeweils eine Zeitinformation zugeordnet wird, wobei in den Funktionsschritten jeweils Daten/Werte zu physikalischen Größen verarbeitet werden und zu definierten Zeitpunkten Fusionsdatensätze bereitgestellt werden, welche jeweils einen relativen Wert der physikalischen Größe sowie eine Information über die Datenqualität bezüglich jeder physikalischen Größe bereitstellt, die das Fusionsfilter verarbeitet und/oder berechnet.

Das Fusionsfilter weist vorzugsweise zumindest zu einer der physikalischen Größen intern einen Absolutwert und/oder internen Wert dieser physikalischen Größe auf, wobei die Absolutwerte und/oder internen Werte der vergangenen Funktionsschritte zu einer oder mehreren physikalischen Größen eine definierte Zeitspanne, gespeichert und bereitgehalten werden.

Es ist zweckmäßig, dass abhängig von der Zeitinformation der Eingangswerte, einer physikalischen Größe, des Fusionsfilters diese Eingangswerte im Fusionsfilter verrechnet werden, indem sie mit dem Absolutwert und/oder internen Wert derselben physikalischen Größe verglichen und/oder verrechnet werden, deren Zeitinformation, also die Zeitinformation des Absolutwerts und/oder des internen Werts, im Wesentlichen mit der Zeitinformation des Eingangswerts übereinstimmt.

Es ist bevorzugt, dass der Absolutwert und/oder interne Wert derselben physikalischen Größe mit welcher der Eingangswert verglichen und/oder verrechnet wird, aus den beiden bezüglich der Zeitinformationen zeitlich nächstliegenden, gespeicherten und bereitgehaltenen Absolutwerten und/oder internen Werten interpoliert wird, insbesondere sind dies der Absolutwert und/oder interne Wert mit einer Zeitinformation, welche etwas jünger ist und der Absolutwert und/oder interne Wert mit einer Zeitinformation, welche etwas älter ist als die Zeitinformation des zugeordneten Eingangswerts.

Es ist zweckmäßig, dass den Eingangswerten des Fusionsfilters jeweils eine Zeitinformation zugeordnet ist, wodurch diese Eingangswerte physikalischer Größen jeweils einen Zeitrang aufweisen, wobei im Rahmen des anstehenden Funktionsschritts die Eingangswerte physikalischer Größen des Fusionsfilters mit internen Werten des Fusionsfilters derselben physikalischen Größen verrechnet werden, welche im Zeitrang und/oder bezüglich der Zeitinformation im Wesentlichen der jeweiligen Zeitinformation und/oder dem Zeitrang der jeweiligen Eingangsgröße entsprechen.

Die Signalverarbeitungseinrichtung ist vorzugsweise so ausgebildet, dass der Zeitrang des aktuell anstehenden Funktionsschritts definiert wird durch die Zeitinformation des Eingangswerts einer physikalischen Größe mit der jüngsten Zeitinformation, wobei die Eingangswerte physikalischer Größen, deren Zeitinformation älter sind auf den Zeitrang der jüngsten Zeitinformation extrapoliert werden und anschließend mit internen Werten des Fusionsfilters verrechnet werden.

Es ist bevorzugt, dass die Signalverarbeitungseinrichtung so ausgebildet ist, dass die definierte Zeitspanne, in welcher Daten/ Informationen/ Werte gespeichert und bereitgehalten werden, definiert wird durch die maximale Verzögerung der Eingangsdaten des Fusionsfilters, welche sich aus der maximalen Differenz der Zeitinformation der Messung einer physikalischen Größe relativ zur Zeitinformation eines aktuell anstehenden Funktionsschritts des Fusionsfilter bestimmt, wobei die maximale Verzögerung insbesondere definiert ist größer oder gleich der maximal erwarteten Verzögerung einer Messung eines Satellitennavigationssystems, welches Teil des Sensorsystems ist.

Es ist zweckmäßig, dass die Signalverarbeitungseinrichtung so ausgebildet ist, dass die definierte Zeitspanne, in welcher Daten/ Informationen/ Werte gespeichert und bereitgehalten werden, definiert wird durch eine definierte Zeitspanne, welche für einige oder jede physikalische Größe unterschiedlich ausgeprägt ist.

Das Sensorsystem umfasst vorzugsweise ein Satellitennavigationssystem, welches einen Synchronisationsimpuls und/oder ein Synchronisationsverfahren bereitstellt, mit welchem die Zeitinformationen des Fusionsfilters mit den Zeitinformationen des Satellitennavigationssystems synchronisiert werden.

Es ist zweckmäßig, dass das Satellitennavigationssystem Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe bereitstellt, welche als Eingangswerte an das Fusionsfilter übertragen werden, wobei diese Eingangswerte physikalischer Größen des Satellitennavigationssystem mit internen Werten des Fusionsfilters zeitkorrigiert verrechnet werden, indem in Abhängigkeit der Zeitinformationen der Eingangswerte die internen Werte dieser physikalischen Größen extrapoliert werden, falls die Zeitinformationen der Eingangswerte dieser physikalischen Größen älter sind als Zeitinformation des aktuell anstehenden Funktionsschritts des Fusionsfilters, wobei zur Extrapolation insbesondere ein Gradient der letzten zwei Werte einer solchen physikalischen Größe verwendet wird, falls diese zwei Werte auf zwei aufeinanderfolgenden Messungen beruhen, zwischen denen keine Messung derselben Messgröße ausgefallen ist.

Es ist bevorzugt, dass das Fusionsfilter so ausgebildet ist, dass es wenigstens eine Modellannahme berücksichtigt, welche davon ausgeht, dass die Offsetwerte und/oder Änderungswerte und/oder Korrekturwerte und/oder Fehlerwerte zwischen einem oder mehreren Funktionsschritten des Fusionsfilters sich nur begrenzt oder vernachlässigbar ändern innerhalb der definierte Zeitspanne, für welche insbesondere Absolutwerte und/oder internen Werte physikalischer Größen gespeichert werden.

Vorzugsweise liegt der Erfindung der Gedanke zu Grunde, um die redundanten Messdaten verschiedener Sensoren bzw. Sensorelemente bzw. optional zusätzlich eines Satellitennavigationssystems, die zu unterschiedlichen Zeitpunkten gemessen werden, in einem Fusionsfilter miteinander zu verrechnen und damit die Vorteile der Redundanz in Rahmen einer Sensorfusion nutzen zu können, ist es vorteilhaft, dass Messgrößen und/oder interne Werte des Fusionsfilters die zum gleichen Messzeitpunkt gehörend vorliegen zu verrechnen, um den Fehler zwischen veralteten Messdaten, welche die Eingangswerte des Fusionsfilters bilden, zu aktuellen Messdaten, den Werten zu den Messdaten, welche aktuell in einem anstehenden Funktionsschritts des Fusionsfilters vorliegen, möglichst gering zu halten.

Das Fusionsfilter ist bevorzugt so ausgebildet, dass die Vergleichswerte bzw. interne Werte physikalischer Größen des Fusionsfilters über eine gewisse Zeit bzw. eine definierte Zeitspanne, die insbesondere sämtliche Verzugszeiten aller Eingangsdaten abdecken sollte, zwischengespeichert werden und dann für die Datenfusion der passende interne Wert der Vergangenheit für den Vergleich ausgewählt wird und mit einem Eingangswert verrechnet wird. Konkret kann dies beispielsweise durch die Abtastung/Samplerate/Messzeitpunkte beschränkt sein, ein gewisses Abstandsintervall zwischen internen Werten des Filters und Messdaten bleibt besonders bevorzugt bestehen. Alternativ vorzugsweise werden die Werte werden zwischen 2 Abtastungen des Filters soweit feininterpoliert, dass ein gültiger Messwert passend zum Zeitpunkt der Messdaten vorliegt. Wenn nun die internen Werte aus Fusion und Messdaten bzw. Eingangswerte, jeweils gleicher physikalischer Größe, zum gleichen Zeitpunkt bzw. mit im Wesentlichen gleicher zugeordneter Zeitinformation vorliegen, können sie einfach miteinander verrechnet/fusioniert werden. Zweckmäßigerweise erfolgt ein Vergleich der Daten aus der Fusion mit denen der Messdaten, daraus werden dann die Korrekturwerte bestimmt, welche die Werte des Fusionsfilters aktualisieren.

Es ist bevorzugt, dass die Signalverarbeitungseinrichtung so ausgebildet ist, dass sämtliche Eingangswerte des Fusionsfilters jeweils samt den zugeordneten Zeitinformationen für eine definierte Zeitspanne gespeichert werden sowie dass die Absolutwerte und/oder internen Werte der vergangenen Funktionsschritte des Fusionsfilters zu einer oder mehreren physikalischen Größen eine definierte Zeitspanne samt den jeweils zugeordneten Zeitinformationen gespeichert werden. Es ist zweckmäßig, dass der Zeitrang des aktuell anstehenden Funktionsschritts wird definiert durch die Zeitinformation des Eingangswerts einer physikalischen Größe mit der jüngsten Zeitinformation. Zweckmäßigerweise werden abhängig von der Zeitinformation der Eingangswerte, einer physikalischen Größe, des Fusionsfilters diese Eingangswerte im Fusionsfilter verrechnet, indem sie mit dem Absolutwert und/oder internen Wert derselben physikalischen Größe verglichen und/oder verrechnet werden, deren Zeitinformation, also die Zeitinformation des Absolutwerts und/oder des internen Werts, im Wesentlichen mit der Zeitinformation des Eingangswerts übereinstimmt. Das Ergebnis dieser Verrechnung hat den Zeitrang bzw. bezieht sich auf den Zeitpunkt der Zeitinformation, welche der Eingangsgröße sowie dem Absolutwert bzw. internen Wert zugeordnet waren. Ausgehend von diesem Ergebnis werden einer oder mehrere Funktionsschritte durch das Fusionsfilter durchgeführt, mit den jeweils um einen Funktionsschritt jüngeren Eingangsdaten und Absolutwerten bzw. internen Werten zeitlich vorwärts gerechnet werden, bis das Ergebnis des Funktionsschritts vorliegt, der den Zeitrang hat bzw. dem eine Zeitinformation zugeordnet ist, welcher dem Zeitrang des zu Beginn dieses Berechnungsprozesses aktuell anstehenden Funktionsschritts entspricht, welcher definiert wurde durch die Zeitinformation des Eingangswerts einer physikalischen Größe mit der jüngsten Zeitinformation.

Bevorzugt versteht man unter einem Zeitrang eine absolute oder relative Zeitinformation oder alternativ vorzugsweise einen Rang in einer zeitlichen Reihenfolge, alternativ insbesondere eine Kombination aus beidem.

Die Erfindung bezieht sich außerdem auf die Verwendung des Sensorsystems in Fahrzeugen, insbesondere Kraftfahrzeugen, besonders bevorzugt in Automobilen.

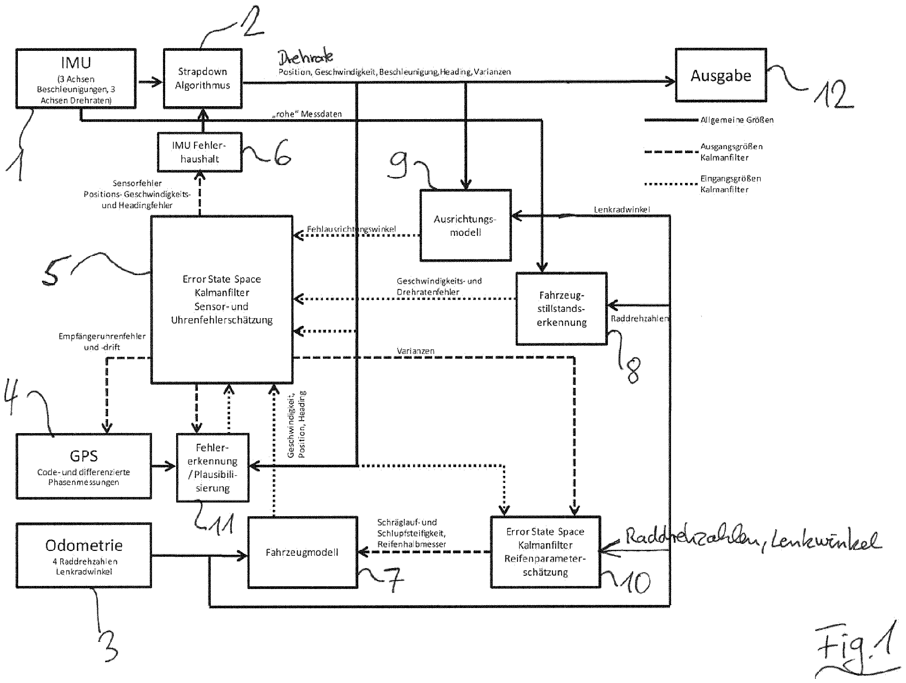

Weitere bevorzugte Ausführungsformen ergeben sich aus den Unteransprüchen und der nachfolgenden Beschreibung eines Ausführungsbeispiels an Hand von Fig. 1.

Fig. 1 zeigt in schematischer Darstellung ein Ausführungsbeispiel des Sensorsystems, das zur Anordnung und Verwendung in einem Fahrzeug vorgesehen ist. Dabei sind die Sensorelemente und das Satellitennavigationssystem sowie die wichtigsten Signalverarbeitungseinheiten der Signalverarbeitungseinrichtung als Funktionsblöcke veranschaulicht und deren Zusammenwirken untereinander.

Das Sensorsystem umfasst eine Inertialsensoranordnung 1, IMU, "inertial measurement unit", die so ausgebildet ist, dass sie zumindest die Beschleunigungen entlang einer ersten, einer zweiten und einer dritten definierte Achse und wenigstens die Drehraten um diese erste, um diese zweite und um die dritte definierte Achse erfassen kann, wobei die erste definierte Achse der Längsachse des Fahrzeugs entspricht, die zweite definierte Achse der Querachse des Fahrzeugs entspricht und die dritte definierte Achse der Hochachse des Fahrzeugs entspricht. Diese drei Achsen bilden ein kartesisches Koordinatensystem, das Fahrzeugkoordinatensystem.

Das Sensorsystem weist eine Strapdown-Algorithmus-Einheit 2 auf, in welcher ein Strapdown-Algorithmus durchgeführt wird, mit dem wenigstens die Sensorsignale der Inertialsensoranordnung 1 zu korrigierten, Navigationsdaten und/oder Fahrdynamikdaten verarbeitet werden. Diese Ausgangsdaten der Strapdown-Algorithmus-Einheit 2 umfassen die Daten folgender physikalischer Größen:

die Geschwindigkeit, die Beschleunigung sowie die Drehrate jeweils des Fahrzeugs, beispielhaft bezüglich der drei Achsen des Fahrzeugkoordinatensystems und beispielgemäß zusätzlich jeweils bezogen auf ein Weltkoordinatensystem, das zur Beschreibung der Ausrichtung und/oder von dynamischen Größen des Fahrzeugs auf der Welt geeignet ist. Außerdem umfassen die Ausgangsdaten der Strapdown-Algorithmus-Einheit 2 die Position bezüglich des Fahrzeugkoordinatensystems und die Ausrichtung hinsichtlich des Weltkoordinatensystems. Zusätzlich weisen die Ausgangsdaten der Strapdown-Algorithmus-Einheit die Varianzen als Information über die Datenqualität der obig genannten physikalischen Größen auf, zumindest einiger davon. Diese Varianzen werden beispielgemäß nicht in der Strapdown-Algorithmus-Einheit berechnet, sondern nur von dieser verwendet und weitergeleitet.

Die Ausgangsdaten der Strapdown-Algorithmus-Einheit sind beispielhaft außerdem die Ausgangsdaten bzw. -signale bzw. Ausgabedaten 12 des gesamten Sensorsystems.

Das Sensorsystem umfasst außerdem Raddrehzahlsensorelemente 3 für jedes Rad des Fahrzeugs, beispielgemäß vier, welche die Raddrehzahlen jeweils eines der Räder des Fahrzeugs erfassen und jeweils zusätzlich die Drehrichtung erfassen, und zusätzlich ein Lenkwinkelsensorelement 3, das den Lenkwinkel des Fahrzeugs erfasst. Die Raddrehzahlsensorelement und das Lenkwinkelsensorelement bilden eine Sensoranordnung 3 zur Erfassung der Odometrie.

Darüber hinaus weist das Sensorsystem ein Satellitennavigationssystem 4 auf, welches so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt. Zusätzlich stellt das Satellitennavigationssystem 4 beispielgemäß dem Fusionsfilter eine Startposition bzw. Startpositionsinformation bereit, zumindest zum Start oder Einschalten des Sensorsystems.

Die Signalverarbeitungseinrichtung des Sensorsystems umfasst außerdem ein Fusionsfilter 5. Das Fusionsfilter 5 stellt im Zuge der gemeinsamen Auswertung zumindest der Sensorsignale und/oder daraus abgeleiteter Signale der Sensorelemente 3, also der Odometrie, und der Ausgangssignale des Satellitennavigationssystems 4 und/oder daraus abgeleiteter Signale einen definierten Fusionsdatensatz 6 bereit. Dieser Fusionsdatensatz weist jeweils Daten zu definierten physikalischen Größen auf, wobei der Fusionsdatensatz 6 zu wenigstens einer physikalischen Größe einen Wert dieser physikalischen Größe und eine Information über deren Datenqualität umfasst, wobei diese Information über die Datenqualität beispielgemäß als Varianz ausgeprägt ist.

Der Fusionsdatensatz 6 umfasst als Wert der wenigstens einen physikalischen Größe einen relativen Wert, beispielhaft einen Korrekturwert, auch Offsetwert genannt. Beispielgemäß ergibt sich der Korrekturwert jeweils aus den kumulierten Fehlerwerten bzw. Änderungswerten, die vom Fusionsfilter 5 bereitgestellt werden.

Die relativen Werte der jeweiligen physikalischen Größen des Fusionsdatensatzes 6 sind also beispielgemäß Korrekturwerte und Varianzen. Der Fusionsdatensatz 6 berechnet beispielgemäß, anders formuliert, einen Fehlerhaushalt, welcher als Eingangsgröße bzw. Eingangsdatensatz der Strapdown-Algorithmus-Einheit bereitgestellt wird und von dieser bei ihren Berechnungen zumindest teilweise berücksichtigt wird. Dieser Fehlerhaushalt umfasst als Datensatz bzw. Ausgangsdaten zumindest Korrekturwerte bzw. Fehlerwerte physikalischer Größen sowie jeweils eine Varianz, als Information über die Datenqualität, zu jedem Wert. Hierbei werden vom Fusionsfilter zumindest die Korrekturwerte und Varianzen zu den physikalischen Größen Geschwindigkeit, Beschleunigung und Drehrate, jeweils bezogen auf das Fahrzeugkoordinatensystem, also jeweils die drei Komponenten dieser Größen bezüglich dieses Koordinatensystems, sowie IMU-Ausrichtung bzw. der IMU-Ausrichtungswinkel zwischen Fahrzeugkoordinatensystem und dem Koordinatensystem bzw. der Einbauausrichtung der Inertialsensoranordnung 1 sowie die Position bezogen auf das Weltkoordinatensystem an die Strapdown-Algorithmus-Einheit übertragen.

Die Werte der physikalischen Größen des Fusionsdatensatzes werden auf direkter bzw. indirekter Basis der Sensorsignale der Sensorelemente 3 und des Satellitennavigationssystems 4 berechnet, wobei wenigstens einige Größen, beispielsweise die Geschwindigkeit und die Position des Fahrzeugs bezüglich der Fahrzeugkoordinaten redundant zu den Daten der Strapdown-Algorithmus-Einheit 2 erfasst werden und verwertet werden.

Das Fusionsfilter 5 ist als beispielgemäß als Error State Space Extended Sequential Kalman Filter ausgebildet ist, also als Kalman Filter, das insbesondere eine Linearisierung umfasst und in welchem die Korrekturwerte berechnet und/oder geschätzt werden und welches sequenziell arbeitet und dabei die in dem jeweiligen Funktionsschritt der Sequenz verfügbaren Eingangsdaten verwendet/berücksichtigt.

Das Fusionsfilter 5 ist so ausgebildet, dass im Zuge eines Funktionsschritts des Fusionsfilters stets, asynchron, die neuesten, dem Fusionsfilter verfügbaren Informationen und/oder Signale und/oder Daten der Sensorelemente 3, also der Raddrehzahlsensorelemente und des Lenkwinkelsensorelements indirekt mittels einer Fahrzeugmodelleinheit 7 und des Satellitennavigationssystems 4 direkt oder indirekt, sequenziell aktualisiert und/oder in das Fusionsfilter aufgenommen werden und bei der Berechnung des zugeordneten Funktionsschritts des Fusionsfilters 5 berücksichtigt werden.

Die Fahrzeugmodelleinheit 7 ist so ausgebildet, dass sie aus den Sensorsignalen der Raddrehzahlsorelemente 3 und des Lenkwinkelsensorelements 3 zumindest die Geschwindigkeit entlang einer ersten definierten Achse, die Geschwindigkeit entlang einer zweiten definierten Achse sowie die Drehrate um eine dritte definierte Achse berechnet und dem Fusionsfilter 5 bereitstellt.

Das Sensorsystem weist beispielgemäß vier Raddrehzahlsensorelemente 3 auf, wobei jeweils eins der Raddrehzahlsensorelemente jedem Rad des Fahrzeugs zugeordnet ist, wobei die Fahrzeugmodelleinheit 7 so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das Lenkwinkelsensorelement für die Vorderräder und mittels wenigstens eines weiteren Lenkwinkelsensorelements für die Hinterräder oder zumindest aus einer Modellannahme für die Hinterräder,

die Geschwindigkeitskompenenten und/oder die Geschwindigkeit, jedes Rades, entlang/bezüglich der ersten und der zweiten definierten Achse direkt oder indirekt berechnet,

wobei aus diesen acht Geschwindigkeitskomponenten und/oder den vier Geschwindigkeiten jeweils bezüglich der ersten und zweiten definierten Achse,

die Geschwindigkeit entlang einer ersten definierten Achse, die Geschwindigkeit entlang einer zweiten definierten Achse sowie die Drehrate um eine dritte definierte Achse berechnet wird.

Das Sensorsystem bzw. dessen Signalverar-beitungseinrichtung umfasst außerdem eine Reifenpa-rameterschätzungseinheit 10, welche so ausgebildet ist, dass sie zumindest den Halbmesser, beispielgemäß den dynamischen Halbmesser, jeden Rades berechnet und zusätzlich die Schräglaufsteifigkeit und die Schlupfsteifigkeit jeden Rades berechnet und der Fahrzeugmodelleinheit 7 als zusätzliche Eingangsgrößen bereitstellt, wobei die Reifenparameterschätzungseinheit 10 so ausgebildet ist, dass sie ein im Wesentlichen lineares Reifenmodell zur Berechnung der Rad-/Reifengrößen verwendet. Die beispielgemäßen Eingangsgrößen der Rei-fenparameterschätzungseinheit sind dabei die Raddreh-zahlen 3 und der Lenkwinkel 3, zumindest teilweise oder vollständig die Ausgangsgrößen bzw. -werte der Strapdown-Algorithmus-Einheit 2, insbesondere die von ihr bereitgestellten Varianzen zusätzlich zu den Werten der physikalischen Größen, sowie die Varianzen des Fusionsfilters 5, zu den physikalischen Größen, welche die Eingangsgrößen der Reifenparameterschätzungseinheit 10 sind.

Das Sensorsystem bzw. dessen Signalverarbeitungseinrichtung umfasst außerdem eine GPS-Fehlererkennungs-und-Plausibilisierungseinheit 11, welche so ausgebildet ist, dass sie beispielgemäß als Eingangsdaten die Ausgangsdaten bzw. Ausgangssignale des Satellitennavigationssystem 4 sowie zumindest teilweise die Ausgangsdaten bzw. Ausgangssignale der Strapdown-Algorithmus-Einheit 2 erhält und in ihren Berechnungen berücksichtigt

Dabei ist die GPS-Fehlererkennungs-und-Plausibilisierungseinheit 11 zusätzlich mit dem Fusionsfilter 5 verbunden und tauscht mit diesem Daten aus.

Die GPS-Fehlererkennungs-und-Plausibilisierungseinheit 11 ist beispielhaft so ausgebildet, dass sie folgendes Verfahren durchführt:

Verfahren zum Auswählen eines Satelliten, umfassend:

- Messen von Messlagedaten des Fahrzeuges gegenüber dem Satelliten basierend auf dem GNSS-Signal, also dem Globalen Navigationssatellitensystem-Signal, dem Ausgangssignal bzw. den Ausgangsdaten des Satellitennavigationssystems 4,

- Bestimmen von zu den basierend auf dem GNSS-Signal bestimmten Messlagedaten redundanten Referenzlagedaten des Fahrzeuges; und

- Auswählen des Satelliten, wenn eine Gegenüberstellung der Messlagedaten und der Referenzlagedaten einer vorbestimmten Bedingung genügt,

- wobei zur Gegenüberstellung der Messlagedaten und der Referenzlagedaten eine Differenz zwischen den Messlagedaten und den Referenzlagedaten gebildet wird,

- wobei die vorbestimmte Bedingung ein maximal zulässiger Fehler zwischen den Messlagedaten und den Referenzlagedaten ist,

- wobei der maximal zulässige Fehler von einer Standardabweichung abhängig ist, die basierend auf einer Summe aus einer Referenzvarianz für die Referenzlagedaten und einer Messvarianz für die Messlagedaten berechnet wird,

- wobei der maximal zulässige Fehler einem Viel-fachen der Standardabweichung derart ent-spricht, dass eine Wahrscheinlichkeit, dass die Messlagedaten in ein von der Standardabwei-chung abhängiges Streuintervall einen vorbe-stimmten Schwellwert unterschreiten.

Das Sensorsystem bzw. dessen Signalverar-beitungseinrichtung weist außerdem eine Stillstander-kennungseinheit 8 auf, welche so ausgebildet ist, dass sie einen Stillstand des Fahrzeugs erkennen kann und im Fall eines erkannten Stillstands des Fahrzeugs zumindest dem Fusionsfilter 5 Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen. Die Stillstandserkennungseinheit 8 ist dabei beispielgemäß so ausgebildet, dass sie als Eingangsdaten die Raddrehzahlen bzw. Raddrehzahlsignale nutzt sowie die "rohen" bzw. direkten Ausgangssignale der Inertialsensoranordnung 1.

Die Signalverarbeitungseinrichtung berechnet und/oder verwendet beispielgemäß eine erste Gruppe von Daten physikalischer Größen, deren Werte sich auf ein Fahrzeugkoordinatensystem beziehen und zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit 9 aufweist, mit welcher der Ausrichtungswinkel zwischen dem Fahrzeugkoordinatensystem und dem Weltkoordinatensystem berechnet wird.

Der Ausrichtungswinkel zwischen dem Fahrzeugkoordinatensystem und dem Weltkoordinatensystem in der Ausrichtungsmodelleinheit 9 wird berechnet zumindest auf Basis folgender Größen:

die Geschwindigkeit bezüglich des Fahrzeugkoordinatensystems, die Geschwindigkeit bezüglich des Weltkoordinatensystems und den Lenkwinkel.

Der Ausrichtungswinkel zwischen dem Fahrzeugkoordinatensystem und dem Weltkoordinatensystem wird beispielgemäß in der Ausrichtungsmodelleinheit 9 zusätzlich zumindest auf Basis einer oder mehrerer der folgenden Größen berechnet:

eine Ausrichtungsinformation des Fahrzeugs bezogen auf das Weltkoordinatensystem,
einige oder sämtliche der Korrekturwerte und/oder Varianzen des Fusionsfilters und/oder
die Beschleunigung des Fahrzeugs bezogen auf das Fahrzeugkoordinatensystem und/oder das Weltkoordinatensystem.

Die Ausrichtungsmodelleinheit 9 verwendet einige oder sämtliche der Ausgangsdaten und/oder Ausgangssignale der Strapdown-Algorithmus-Einheit 2 zur Berechnung.

Die Ausrichtungsmodelleinheit 9 ist beispielgemäß so ausgebildet, dass sie zusätzlich zu dem Ausrichtungswinkel noch eine Information über die Datenqualität dieser Größe berechnet und bereitstellt, insbesondere die Varianz des Ausrichtungswinkels, wobei die Ausrichtungsmodelleinheit 9 den Ausrichtungswinkel zwischen dem Fahrzeugkoordinatensystem und dem Weltkoordinatensystem sowie die Information über die Datenqualität dieser Größe dem Fusionsfilter 5 bereitstellt und der Fusionsfilter diesen Ausrichtungswinkel bei seinen Berechnungen verwendet und besonders bevorzugt die die Information über die Datenqualität dieser Größe, insbesondere die Varianz des Ausrichtungswinkels, an die Strapdown-Algorithmus-Einheit 2 weiterleitet.

**Patentansprüche**

1. Sensorsystem zur Ausgabe von Navigationsdaten und/oder Fahrdynamikdaten, umfassend mehrere Sensorelemente (1, 3, 4), die so ausgebildet sind, dass sie zumindest teilweise unterschiedliche primäre Messgrößen erfassen und zumindest teilweise unterschiedliche Messprinzipien nutzen, des Weiteren umfassend eine Signalverarbeitungseinrichtung, wobei die Signalverarbeitungseinrichtung so ausgebildet ist, dass sie die Sensorsignale der Sensorelemente gemeinsam auswertet, wobei die Signalverarbeitungseinrichtung eine Strapdown-Algorithmus-Einheit (2) zur Ausführung eines Strapdown-Algorithmus zur Ausgabe von Navigationsdaten und/oder Fahrdynamikdaten und ein Fusionsfilter (5) aufweist, wobei das Fusionsfilter (5) im Zuge der gemeinsamen Auswertung der Sensorsignale und daraus abgeleiteter Signale der Sensorelemente der Strapdown-Algorithmus-Einheit (2) einen definierten Fusionsdatensatz (6) bereitstellt, wobei dieser Fusionsdatensatz jeweils Daten zu definierten physikalischen Größen aufweist, wobei der Fusionsdatensatz (6) zu jeder physikalischen Größe einen Wert dieser physikalischen Größe und eine Information über deren Datenqualität umfasst, wobei das Fusionsfilter jeweils eine Varianz als Information über deren Datenqualität jedem Wert einer physikalischen Größe des Fusionsfilters in der Weise zuordnet, dass der Fusionsdatensatz als Information über die Datenqualität jeweils eine Varianz zu jedem Wert einer physikalischen Größe des Fusionsfilters umfasst, und wobei die Ausgangsdaten der Strapdown-Algorithmus-Einheit (2) zusätzlich die Varianzen der physikalischen Größen aufweisen.

2. Sensorsystem nach Anspruch 1, **dadurch gekennzeichnet, dass** das Fusionsfilter (5) so ausgebildet ist, dass der Fusionsdatensatz (6) als Wert der wenigstens einen physikalischen Größe einen relativen Wert umfasst, insbesondere einen Offsetwert und/oder Änderungswert und/oder Korrekturwert und/oder Fehlerwert.

3. Sensorsystem nach mindestens einem der Ansprüche 1 bis 2, **dadurch gekennzeichnet, dass** das Fusionsfilter (5) so ausgebildet ist, dass der Wert wenigstens einer physikalischen Größe des Fusionsdatensatzes (6) auf direkter oder indirekter Basis von Sensorsignalen mehrerer Sensorelemente (1, 3, 4) berechnet wird, wobei diese Sensorelemente (1, 3, 4) diese wenigstens eine physikalische Größe redundant in direkter oder indirekter Weise erfassen.

4. Sensorsystem nach mindestens einem der Ansprüche 1 bis 3, **dadurch gekennzeichnet, dass** das Fusionsfilter (5) als Kalmanfilter ausgebildet ist, das iterativ wenigstens Prädiktionsschritte sowie Korrekturschritte durchführt und zumindest teilweise den Fusionsdatensatz (6) bereitstellt.

5. Sensorsystem nach Anspruch 4, **dadurch gekennzeichnet, dass** das Fusionsfilter (5) als Error State Space Extended Sequential Kalman Filter ausgebildet ist, also als Kalman Filter, das insbesondere eine Linearisierung umfasst und in welchem Fehlerzustandinformationen berechnet und/oder geschätzt werden und/oder welches sequentiell arbeitet und dabei die in dem jeweiligen Funktionsschritt der Sequenz verfügbaren Eingangsdaten verwendet/berücksichtigt.

6. Sensorsystem nach mindestens einem der Ansprüche 1 bis 5, **dadurch gekennzeichnet, dass** das Sensorsystem eine Inertialsensoranordnung (1) aufweist, umfassend wenigstens ein Beschleunigungssensorelement und zumindest ein Drehratensensorelement, und dass das Sensorsystem eine Strapdown-Algorithmus-Einheit (2) umfasst, in welcher ein Strapdown-Algorithmus durchgeführt wird, mit dem wenigstens die Sensorsignale der Inertialsensoranordnung (1) zu, insbesondere korrigierten, Navigationsdaten und/oder Fahrdynamikdaten verarbeitet werden, bezogen auf das Fahrzeug, in welchem das Sensorsystem angeordnet ist.

7. Sensorsystem nach Anspruch 6, **dadurch gekennzeichnet, dass** die Strapdown-Algorithmus-Einheit (2) ihre berechneten Navigationsdaten und/oder Fahrdynamikdaten dem Fusionsfilter (5) direkt oder indirekt bereitstellt.

8. Sensorsystem nach mindestens einem der Ansprüche 1 bis 7, **dadurch gekennzeichnet, dass** das Sensorsystem eine Inertialsensoranordnung (1) aufweist, welche so ausgebildet ist, dass sie zumindest die Beschleunigung entlang einer zweiten definierten Achse, insbesondere der Querachse des Fahrzeugs, und wenigstens die Drehrate um eine dritte definierte Achse, insbesondere der Hochsachse des Fahrzeugs, erfassen kann, wobei die erste und die dritte definierte Achse ein Erzeugendensystem bilden, und dabei insbesondere senkrecht zueinander ausgerichtet sind, wobei das Sensorsystem außerdem mindestens ein Raddrehzahlsensorelement (3), insbesondere zumindest oder genau vier Raddrehzahlsensorelemente aufweist, welche die Raddrehzahl eines Rades oder die Raddrehzahlen jeweils eines der Räder des Fahrzeugs erfassen, in dem das Sensorsystem angeordnet ist, wobei das Sensorsystem zusätzlich wenigstens ein Lenkwinkelsensorelement (3) umfasst, welches den Lenkwinkel des Fahrzeugs erfasst und wobei das Sensorsystem darüber hinaus ein Satellitennavigationssystem (4) umfasst, welches insbesondere so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt.

9. Sensorsystem nach Anspruch 8, **dadurch gekenn-**

zeichnet, dass die Inertialsensoranordnung (1) so ausgebildet ist, dass sie zumindest die Beschleunigungen entlang einer ersten, einer zweiten und einer dritten definierte Achse und wenigstens die Drehraten um diese erste, um diese zweite und um diese dritte definierte Achse erfassen kann, wobei diese erste, zweite und dritte definierte Achse ein Erzeugendensystem bilden, und dabei insbesondere jeweils senkrecht zueinander ausgerichtet sind.

10. Sensorsystem nach Anspruch 8 oder 9, **dadurch gekennzeichnet, dass** die Inertialsensoranordnung (1) ihre Sensorsignale der Strapdown-Algorithmus-Einheit (2) bereitstellt und die Strapdown-Algorithmus-Einheit (2) so ausgebildet ist, dass sie zumindest
aus den Sensorsignalen der Inertialsensoranordnung (1) sowie
insbesondere wenigstens einer Fehlerzustandsinformation und/oder Varianz und/oder Information über die Datenqualität, die einem Sensorsignal oder einer physikalischen Größe zugeordnet ist und von dem Fusionsfilter bereitgestellt wird,
als Messgrößen und/oder Navigationsdaten und/oder Fahrdynamikdaten
mindestens korrigierte Beschleunigungen entlang der ersten, der zweiten und der dritten definierten Achse, wenigstens korrigierte Drehraten um diese drei definierten Achsen,
wenigstens eine Geschwindigkeit bezüglich dieser drei definierten Achsen
sowie zumindest eine Positionsgröße
berechnet und/oder bereitstellt.

11. Sensorsystem nach mindestens einem der Ansprüche 8 bis 10, **dadurch gekennzeichnet, dass** das Sensorsystem so ausgebildet ist, dass jeweils zumindest ein Sensorsignal und/oder eine physikalische Größe als direkte oder abgeleitete Größe
der Inertialsensoranordnung (1) und/oder der Strapdown-Algorithmus-Einheit (2),
der Raddrehzahlsensorelemente (3) und des Lenkwinkelsensorelements (3), insbesondere indirekt über eine Fahrzeugmodelleinheit (7),
sowie des Satellitennavigationssystems (4), dabei insbesondere Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe,
dem Fusionsfilter (5) bereitstellt und vom Fusionsfilter bei dessen Berechnungen berücksichtigt werden.

12. Sensorsystem nach Anspruch 11, **dadurch gekennzeichnet, dass** die Fahrzeugmodelleinheit (7) so ausgebildet ist, dass aus den Sensorsignalen der Raddrehzahlsensorelemente (3) und des Lenkwinkelsensorelements (3) die Geschwindigkeit entlang der ersten definierten Achse,
die Geschwindigkeit entlang der zweiten definierten Achse
sowie die Drehrate um die dritte definierte Achse berechnet werden.

13. Sensorsystem nach Anspruch 12, **dadurch gekennzeichnet, dass** die Fahrzeugmodelleinheit (7) so ausgebildet ist, dass sie zur Berechnung ein Verfahren der kleinsten Fehlerquadrate zur Lösung eines überbestimmten Gleichungssystems, insbesondere als Least-Squared-Error-Verfahren bekannt, verwendet.

14. Sensorsystem nach Anspruch 12 oder 13, **dadurch gekennzeichnet, dass** die Fahrzeugmodelleinheit (7) so ausgebildet ist, dass sie bei ihrer Berechnung mindestens folgende physikalische Größen und/oder Parameter berücksichtigt

    a) den Lenkwinkel jedes Rades, insbesondere durch den Lenkwinkelsensor für die beiden Vorderräder erfasst, wobei die Modellannahme getroffen wird, dass der Lenkwinkel der Hinterräder gleich Null ist oder dass der Lenkwinkel der Hinterräder zusätzlich erfasst wird,
    b) die Raddrehzahl oder eine davon abhängige Größe jeden Rades,
    c) die Drehrichtung jeden Rades,
    d) der dynamische Halbmesser und/oder Raddurchmesser jeden Rades und
    e) die Spurbreite jeder Achse des Fahrzeugs und/oder den Radstand zwischen den Achsen des Fahrzeugs.

15. Sensorsystem nach mindestens einem der Ansprüche 1 bis 14, **dadurch gekennzeichnet, dass** die Signalverarbeitungseinrichtung so ausgebildet ist, dass das Fusionsfilter (5) den Fusionsdatensatz (6) zu definierten Zeitpunkten berechnet und/oder bereitstellt und/oder ausgibt.

16. Sensorsystem nach nach mindestens einem der Ansprüche 1 bis 15, **dadurch gekennzeichnet, dass** das Fusionsfilter (5) so ausgebildet ist, dass es den Fusionsdatensatz (6) unabhängig von den Abtastraten und/oder Sensorsignalausgabezeitpunkten der Sensorelemente (3, 4), insbesondere der Raddrehzahlsensorelemente und des Lenkwinkelsensorelements, und unabhängig von zeitlichen Signal- oder Messgrößen-/ oder Informationsausgabezeitpunkten des Satellitennavigationssystems, berechnet und/oder bereitstellt und/oder ausgibt.

17. Sensorsystem nach Anspruch 15 oder 16, **dadurch gekennzeichnet, dass** die Signalverarbeitungseinrichtung so ausgebildet ist, dass im Zuge eines Funktionsschritts des Fusionsfilters (5) stets, insbesondere asynchron, die neuesten, dem Fusionsfilter (5) verfügbaren Informationen und/oder Signale und/oder Daten der Sensorelemente (3), insbesondere der Raddrehzahlsensorelemente und des Lenkwinkelsensorelements, direkt oder indirekt, insbesondere mittels der Fahrzeugmodelleinheit (7) und
des Satellitennavigationssystems (4) direkt oder indirekt,
sequenziell aktualisiert und/oder in das Fusionsfilter aufgenommen werden und bei der Berechnung des zugeordneten Funktionsschritts des Fusionsfilters berücksichtigt werden.

18. Sensorsystem nach mindestens einem der Ansprüche 1 bis 17, **dadurch gekennzeichnet, dass** das Sensorsystem eine Stillstandserkennungseinheit (8) aufweist, welche so ausgebildet ist, dass sie einen Stillstand des Fahrzeugs erkennen kann und im Fall eines erkannten Stillstands des Fahrzeugs zumindest dem Fusionsfilter (5) Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen.

19. Sensorsystem nach mindestens einem der Ansprüche 1 bis 18, **dadurch gekennzeichnet, dass** die Signalverarbeitungseinrichtung eine erste Gruppe von Daten physikalischer Größen berechnet und/oder verwendet, deren Werte sich auf ein Fahrzeugkoordinatensystem beziehen und wobei die Signalverarbeitungseinrichtung zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei
das Sensorsystem eine Ausrichtungsmodelleinheit (9) aufweist, mit welcher der Ausrichtungswinkel zwischen dem Fahrzeugkoordinatensystem und dem Weltkoordinatensystem berechnet wird, wobei der Ausrichtungswinkel zwischen dem Fahrzeugkoordinatensystem und dem Weltkoordinatensystem in der Ausrichtungsmodelleinheit berechnet wird zumindest auf Basis folgender Größen:

    die Geschwindigkeit bezüglich des Fahrzeugkoordinatensystems,
    die Geschwindigkeit bezüglich des Weltkoordinatensystems und

insbesondere der Lenkwinkel.

## Claims

1. A sensor system for the output of navigation data and/or driving dynamics data, comprising several sensor elements (1, 3, 4) which are configured to capture at least partly different primary measurement variables and to use at least partly different measurement principles, further comprising a signal processing device, wherein
the signal processing device is configured such that it jointly evaluates the sensor signals of the sensor elements, wherein
the signal processing device has a strapdown algorithm unit (2) for executing a strapdown algorithm for the output of navigation data and/or driving dynamics data, and a fusion filter (5), wherein the fusion filter (5), in the course of the joint evaluation of the sensor signals and the signals of the sensor elements derived from these through the strapdown algorithm unit (2), provides a defined fusion data set (6), wherein this fusion data set in each case includes data on defined physical variables, wherein the fusion data set (6) includes for every physical variable a value of this physical variable and information about its data quality, wherein the fusion filter assigns to each value of a physical variable of the fusion filter in each case a variance as information on its data quality in such a way that the fusion data set comprises for each value of a physical variable of the fusion filter in each case a variance as information about the data quality, and wherein the output data of the strapdown algorithm unit (2) additionally have the variances of the physical variables.

2. The sensor system of claim 1, **characterized in that** the fusion filter (5) is configured such that the fusion data set (6) comprises as the value of the at least one physical variable a relative value, in particular an offset value and/or change value and/or correction value and/or error value.

3. The sensor system of at least one of claims 1 to 2, **characterized in that** the fusion filter (5) is configured such that the value of at least one physical variable of the fusion data set (6) is calculated based directly or indirectly on sensor signals of several sensor elements (1, 3, 4), wherein these sensor elements (1, 3, 4) capture this at least one physical variable redundantly in a direct or indirect way.

4. The sensor system of at least one of claims 1 to 3, **characterized in that** the fusion filter (5) is configured as a Kalman filter which iteratively carries out at least prediction steps and correction steps and provides at least in part the fusion data set (6).

5. The sensor system of claim 4, **characterized in that** the fusion filter (5) is configured as an error state space extended sequential Kalman filter, meaning a Kalman filter which comprises in particular a linearization and in which error state information is calculated and/or estimated and/or which operates sequentially and during operation uses/considers the input data available in the respective function step of the sequence.

6. The sensor system of at least one of claims 1 to 5, **characterized in that** the sensor system has an inertial sensor arrangement (1), comprising at least one acceleration sensor element and at least one rotation rate sensor element, and **in that** the sensor system comprises a strapdown algorithm unit (2) in which a strapdown algorithm is executed with which at least the sensor signals of the inertial sensor arrangement (1) can be processed into, in particular corrected, navigation data and/or driving dynamics data related to the vehicle in which the sensor system is arranged.

7. The sensor system of claim 6, **characterized in that** the strapdown algorithm unit (2) provides its calculated navigation data and/or driving dynamics data directly or indirectly to the fusion filter (5).

8. The sensor system of at least one of claims 1 to 7, **characterized in that** the sensor system has an inertial sensor arrangement (1) which is configured such that it can capture at least the acceleration along a second defined axis, in particular the transverse axis of the vehicle, and at least the rotation rate about a third defined axis, in particular the vertical axis of the vehicle, wherein the first and third defined axes form a generating system where they are, in particular, oriented perpendicularly to one another,
wherein the sensor system further has at least one wheel rotational speed sensor element (3), in particular at least or exactly four wheel rotational speed sensor elements, which capture the wheel rotational speed of a wheel or the wheel rotational speeds of a respective one of the wheels of the vehicle in which the sensor system is arranged, wherein the sensor system additionally comprises at least one steering angle sensor element (3) which captures the steering angle of the vehicle, and
wherein the sensor system in addition comprises a satellite navigation system (4) which is in particular configured such that it captures and/or provides distance data in each case between the assigned satellite and the vehicle or a variable dependent thereon and velocity information data in each case between the assigned satellite and the vehicle or a variable dependent thereon.

**9.** The sensor system of claim 8, **characterized in that** the inertial sensor arrangement (1) is configured such that it can capture at least the accelerations along a first, a second and a third defined axis and at least the rotation rates about said first, about said second and about said third defined axis, wherein said first, second and third defined axes form a generating system where they are, in particular, in each case oriented perpendicularly to one another.

**10.** The sensor system of claim 8 or 9, **characterized in that** the inertial sensor arrangement (1) provides its sensor signals to the strapdown algorithm unit (2) and the strapdown algorithm unit (2) is configured such that it calculates and/or provides at least from the sensor signals of the inertial sensor arrangement (1) and in particular from at least one item of error state information and/or variance and/or information about the data quality which is assigned to a sensor signal or a physical variable and is provided by the fusion filter, as measurement variables and/or navigation data and/or driving dynamics data, at least corrected accelerations along the first, the second and the third defined axis, at least corrected rotation rates about these three defined axes, at least one velocity relative to these three defined axes, and at least one position variable.

**11.** The sensor system of at least one of claims 8 to 10, **characterized in that** the sensor system is configured such that in each case at least one sensor signal and/or one physical variable as a direct or derived variable of the inertial sensor arrangement (1) and/or of the strapdown algorithm unit (2), of the wheel rotational speed sensor elements (3) and of the steering angle sensor element (3), in particular indirectly via a vehicle model unit (7), and of the satellite navigation system (4), in particular distance data in each case between the assigned satellite and the vehicle or a variable dependent thereon and velocity information data in each case between the assigned satellite and the vehicle or a variable dependent thereon, is provided to the fusion filter (5) and considered by the fusion filter during its calculations.

**12.** The sensor system of claim 11, **characterized in that** the vehicle model unit (7) is configured such that the sensor signals of the wheel rotational speed sensor elements (3) and of the steering angle sensor element (3) are used to calculate the velocity along the first defined axis, the velocity along the second defined axis, and the rotation rate about the third defined axis.

**13.** The sensor system of claim 12, **characterized in that** the vehicle model unit (7) is configured such that it uses for the calculation a least square error method for solving an overdetermined system of equations, in particular known as a least squared error method.

**14.** The sensor system of claim 12 or 13, **characterized in that** the vehicle model unit (7) is configured such that it considers in its calculation at least the following physical variables and/or parameters:

    a) the steering angle of each wheel, captured in particular by the steering angle sensor for the two front wheels, wherein the model assumption is made that the steering angle of the rear wheels is equal to zero or that the steering angle of the rear wheels is captured as well,
    b) the wheel rotational speed, or a variable dependent thereon, of each wheel,
    c) the direction of rotation of each wheel,
    d) the dynamic radius and/or wheel diameter of each wheel, and
    e) the track width of each axle of the vehicle and/or the wheel base between the axles of the vehicle.

**15.** The sensor system of at least one of claims 1 to 14, **characterized in that** the signal processing device is configured such that the fusion filter (5) calculates and/or provides and/or outputs the fusion data set (6) at defined points in time.

**16.** The sensor system of at least one of claims 1 to 15, **characterized in that** the fusion filter (5) is configured such that it calculates and/or provides and/or outputs the fusion data set (6) independently of the sampling rates and/or sensor signal output points in time of the sensor elements (3, 4), in particular of the wheel rotational speed sensor elements and of the steering angle sensor element, and independently of temporal signal or measurement variable or information output points in time of the satellite navigation system.

**17.** The sensor system of claim 15 or 16, **characterized in that** the signal processing device is configured such that, in the course of a function step of the fusion filter (5), always, in particular asynchronously, the newest information and/or signals and/or data of the sensor elements (3) which are available to the fusion filter (5), in particular, directly or indirectly, of the wheel rotational speed sensor elements and of the steering angle sensor element, are sequentially updated and/or included in the fusion filter and are considered during the calculation of the assigned function step of the fusion filter, in particular, directly or indirectly, by means of the vehicle model unit (7) and the satellite navigation system (4).

**18.** The sensor system of at least one of claims 1 to 17, **characterized in that** the sensor system has a standstill detection unit (8) which is configured such that it can detect a standstill of the vehicle and, in the case of a detected standstill of the vehicle, provides information from a standstill model at least to the fusion filter (5), including in particular the information that the rotation rates about all three axes have the value zero and that at least one position change variable likewise has the value zero and, in particular, that the velocities along all three axes have the value zero.

**19.** The sensor system of at least one of claims 1 to 18, **characterized in that** the signal processing device calculates and/or uses a first group of data of physical variables whose values relate to a vehicle coordinate system, and wherein the signal processing device additionally calculates and/or uses a second group of data of physical variables whose values relate to a world coordinate system, wherein said world coordinate system is in particular suitable at least for describing the orientation and/or dynamic variables of the vehicle in the world, wherein

the sensor system has an orientation model unit (9) which is used to calculate the orientation angle between the vehicle coordinate system and the world coordinate system, wherein the orientation angle between the vehicle coordinate system and the world coordinate system is calculated in the orientation model unit at least on the basis of the following variables:

the velocity relative to the vehicle coordinate system,
the velocity relative to the world coordinate system and
in particular the steering angle.

**Revendications**

**1.** Système de détection pour la sortie de données de navigation et/ou de données de dynamique de conduite, comprenant plusieurs éléments détecteurs (1, 3, 4), lesquels sont formés de telle sorte qu'ils détectent au moins partiellement différentes grandeurs de mesure primaires et utilisent au moins partiellement différents principes de mesure, comprenant en outre une installation de traitement du signal, l'installation de traitement du signal étant formée de telle sorte qu'elle analyse en commun les signaux de détection des éléments détecteurs, l'installation de traitement du signal présentant une unité d'algorithme « strapdown » (2) pour l'exécution d'un algorithme « strapdown » pour la sortie de données de navigation et/ou de données de dynamique de conduite et un filtre de fusion (5), le filtre de fusion (5) mettant à disposition un jeu de données de fusion défini (6) dans le cadre de l'analyse commune des signaux de détection et des signaux des éléments détecteurs de l'unité d'algorithme « strapdown » (2) en étant dérivés, ce jeu de données de fusion présentant respectivement des données relatives aux grandeurs physiques définies, le jeu de données de fusion (6) comprenant, pour chaque grandeur physique, une valeur de cette grandeur physique et une information sur la qualité de ses données,
le filtre de fusion attribuant respectivement à chaque valeur d'une grandeur physique du filtre de fusion une variance comme information sur la qualité de ses données, de telle manière que le jeu de données de fusion comprend respectivement une variance pour chaque valeur d'une grandeur physique du filtre de fusion comme information sur la qualité des données, et les données de sortie de l'unité d'algorithme « strapdown » (2) présentant de plus les variances des grandeurs physiques.

**2.** Système de détection selon la revendication 1, **caractérisé en ce que** le filtre de fusion (5) est formé de telle sorte que le jeu de données de fusion (6) comprend, comme valeur de l'au moins une grandeur physique, une valeur relative, en particulier une valeur de décalage et/ou une valeur de modification et/ou une valeur de correction et/ou une valeur d'erreur.

**3.** Système de détection selon au moins l'une des revendications 1 à 2, **caractérisé en ce que** le filtre de fusion (5) est formé de telle sorte que la valeur d'au moins une grandeur physique du jeu de données de fusion (6) est calculée directement ou indirectement sur la base de signaux de détection de plusieurs éléments détecteurs (1, 3, 4), les éléments détecteurs (1, 3, 4) détectant de manière directe ou indirecte cette au moins une grandeur physique de façon redondante.

**4.** Système de détection selon au moins l'une des revendications 1 à 3, **caractérisé en ce que** le filtre de fusion (5) est formé comme un filtre de Kalman, lequel exécute de façon itérative au moins des étapes de prédiction ainsi que des étapes de correction et met à disposition au moins partiellement le jeu de données de fusion (6).

**5.** Système de détection selon la revendication 4, **caractérisé en ce que**, le filtre de fusion (5) est formé comme filtre de Kalman de type « Error State Space Extended Sequential », c'est-à-dire comme filtre de Kalman comprenant en particulier une linéarisation et dans lequel des informations de condition d'erreur sont calculées et/ou évaluées et/ou travaillant de façon séquentielle et, ce faisant, utilise/prend en compte les données reçues disponibles à l'étape fonctionnelle respective de la séquence.

6. Système de détection selon au moins l'une des revendications 1 à 5, **caractérisé en ce que** le système de détection présente un dispositif de détection d'inertie (1), comprenant au moins un élément de détection d'accélération et au moins un élément de détection de vitesse de giration, et **en ce que** le système de détection comprend une unité d'algorithme « strapdown » (2), dans laquelle un algorithme « strapdown » est exécuté, avec lequel au moins les signaux de détection du dispositif de détection d'inertie (1) sont transformés en données de navigation et/ou en données de dynamique de conduite, en particulier corrigées, rapportées au véhicule sur lequel le système de détection est disposé.

7. Système de détection selon la revendication 6, **caractérisé en ce que**
   l'unité d'algorithme « strapdown » (2) met à disposition du filtre de fusion (5) ses données de navigation et/ou ses données de dynamique de conduite calculées, directement ou indirectement.

8. Système de détection selon au moins l'une des revendications 1 à 7, **caractérisé en ce que** le système de détection présente un dispositif de détection d'inertie (1), lequel est formé de telle sorte qu'il peut détecter au moins l'accélération le long d'un deuxième axe défini, en particulier l'axe transversal du véhicule, et au moins la vitesse de giration sur un troisième axe défini, en particulier l'axe de lacet du véhicule, le premier et le troisième axes définis formant un système générateur et étant en particulier orientés perpendiculairement l'un par rapport à l'autre, le système de détection présentant par ailleurs au moins un élément de détection de vitesse de rotation de roue (3), en particulier au moins ou exactement quatre éléments de détection de vitesse de rotation de roue, lesquels détectent la vitesse de rotation d'une roue ou les vitesses de rotation respectivement d'une des roues du véhicule sur lequel le système de détection est disposé, le système de détection comprenant de plus au moins un élément de détection d'angle de braquage (3), lequel détecte l'angle de braquage du véhicule et le système de détection comprenant par ailleurs un système de navigation par satellite (4), lequel est formé en particulier de telle sorte qu'il détecte et/ou met à disposition les données de distance respectivement entre le satellite attribué et le véhicule ou une grandeur en dépendant, ainsi que des données d'informations de vitesse respectivement entre le satellite attribué et le véhicule ou une grandeur en dépendant.

9. Système de détection selon la revendication 8, **caractérisé en ce que** le dispositif de détection d'inertie (1) est formé de telle sorte qu'il peut détecter au moins les accélérations le long d'un premier, d'un deuxième et d'un troisième axes définis et au moins les vitesses de giration sur ce premier, sur ce deuxième et sur ce troisième axes définis, les premier, deuxième et troisième axes définis formant un système générateur et étant orientés en particulier perpendiculairement l'un par rapport à l'autre.

10. Système de détection selon la revendication 8 ou 9, **caractérisé en ce que** le dispositif de détection d'inertie (1) met à disposition de l'unité d'algorithme « strapdown » (2) ses signaux de détection et **en ce que** l'unité d'algorithme « strapdown » (2) est formée de telle sorte que, au moins
   à partir des signaux de détection du dispositif de détection d'inertie (1),
   ainsi que,
   en particulier, à partir d'au moins une information de condition d'erreur et/ou variance et/ou information sur la qualité des données, laquelle est attribuée à un signal de détection ou à une grandeur physique et est mise à disposition par le filtre de fusion,
   elle calcule et/ou met à disposition,
   comme grandeurs de mesure et/ou données de navigation et/ou données de dynamique de conduite,
   au moins des accélérations corrigées le long du premier, du deuxième et du troisième axes définis,
   au moins des vitesses de giration corrigées sur ces trois axes définis,
   au moins une vitesse relativement à ces trois axes définis,
   ainsi qu'au moins une grandeur de position.

11. Système de détection selon au moins l'une des revendications 8 à 10, **caractérisé en ce que** le système de détection est formé de telle sorte que respectivement au moins un signal de détection et/ou une grandeur physique comme grandeur directe ou dérivée du dispositif de détection d'inertie (1) et/ou de l'unité d'algorithme « strapdown » (2), des éléments de détection de vitesse de rotation de roue (3) et de l'élément de détection d'angle de braquage (3), en particulier indirectement par le biais d'une unité de modélisation de véhicule (7),
   ainsi que du système de navigation par satellite (4), en particulier des données de distance respectivement entre le satellite attribué et le véhicule ou une grandeur en dépendant ainsi que des données d'information de vitesse respectivement entre le satellite attribué et le véhicule ou une grandeur en dépendant,
   sont mis à disposition du filtre de fusion (5) et sont prises en compte par le filtre de fusion lors de ses calculs.

**12.** Système de détection selon la revendication 11, **caractérisé en ce que** l'unité de modélisation de véhicule (7) est formée de telle sorte que la vitesse le long du premier axe défini, la vitesse le long du deuxième axe défini ainsi que la vitesse de giration sur le troisième axe défini sont calculées à partir des signaux de détection des éléments de détection de vitesse de rotation de roue (3) et de l'élément de détection d'angle de braquage (3).

**13.** Système de détection selon la revendication 12, **caractérisé en ce que** l'unité de modélisation de véhicule (7) est formée de telle sorte qu'elle est utilisée pour le calcul de la méthodes des moindres carrés pour la résolution d'un système d'équations surdéterminées, en particulier connue sous le nom de méthode « Least Squared Error ».

**14.** Système de détection selon la revendication 12 ou 13, **caractérisé en ce que** l'unité de modélisation de véhicule (7) est formée de telle sorte qu'elle prend en compte au moins les grandeurs physiques et/ou les paramètres suivants lors de son calcul:

a) l'angle de braquage de chaque roue, en particulier détecté par le détecteur d'angle de braquage pour les deux roues avant, l'hypothèse de modélisation que l'angle de braquage des roues arrière est égal à zéro ou que l'angle de braquage des roues arrière est de plus détecté étant posée,
b) la vitesse de rotation de roue ou une grandeur en dépendant de chaque roue,
c) la direction de rotation de chaque roue,
d) le rayon dynamique et/ou le diamètre de roue de chaque roue et
e) l'écartement des roues de chaque axe du véhicule et/ou l'empattement entre les axes du véhicule.

**15.** Système de capteur selon au moins l'une des revendications 1 à 14, **caractérisé en ce que** l'unité de traitement du signal est formée de telle sorte que le filtre de fusion (5) calcule et/ou met à disposition et/ou sort le jeu de données de fusion (6) à des instants définis.

**16.** Système de détection selon au moins l'une des revendications 1 à 15, **caractérisé en ce que** le filtre de fusion (5) est formé de telle sorte qu'il calcule et/ou met à disposition et/ou sort le jeu de données de fusion (6) indépendamment des taux d'échantillonnage et/ou des instants de sortie de signaux de détection des éléments de détection (3, 4), en particulier des éléments de détection de vitesse de rotation de roue et de l'élément de détection d'angle de braquage, et indépendamment d'instants de sortie de signaux ou de grandeurs de mesure ou d'informations du système de navigation par satellite.

**17.** Système de détection selon la revendication 15 ou 16, **caractérisé en ce que** l'installation de traitement du signal est formée de telle sorte que toujours, en particulier de façon asynchrone, dans le cadre d'une étape fonctionnelle du filtre de fusion (5), les plus récentes informations et/ou signaux et/ou données des éléments de détection (3), en particulier des éléments de détection de vitesse de rotation de roue et de l'élément de détection d'angle de braquage disponibles pour le filtre de fusion (5), directement ou indirectement, sont actualisés de façon séquentielle et/ou enregistrés dans le filtre de fusion, en particulier au moyen de l'unité de modélisation de véhicule (7) et du système de navigation par satellite (4), directement ou indirectement, et sont pris en compte lors du calcul de l'étape fonctionnelle attribuée du filtre de fusion.

**18.** Système de détection selon au moins l'une des revendications 1 à 17, **caractérisé en ce que** le système de détection présente une unité de détection d'arrêt (8), laquelle est formée de telle sorte qu'elle peut détecter un arrêt du véhicule et met à disposition au moins du filtre de fusion (5) des informations à partir d'une modélisation d'arrêt en cas d'un arrêt du véhicule détecté, en particulier les informations que les vitesses de giration sur les trois axes présentent la valeur zéro et au moins une grandeur de modification de position présente également la valeur zéro, ainsi que, en particulier, les vitesses le long des trois axes présentent la valeur zéro.

**19.** Système de détection selon au moins l'une des revendications 1 à 18, **caractérisé en ce que** l'installation de traitement du signal calcule et/ou utilise un premier groupe de données de grandeurs physiques, dont les valeurs se rapportent à un système de coordonnées de véhicule et l'installation de traitement du signal calculant et/ou utilisant de plus un deuxième groupe de données de grandeurs physiques, dont les valeurs se rapportent à un système de coordonnées universel, ce système de coordonnées universel étant en particulier approprié au moins pour la description de l'orientation et/ou des grandeurs dynamiques du véhicule dans l'univers, le système de détection présentant une unité de modélisation d'orientation (9), avec laquelle l'angle d'orientation entre le système de coordonnées de véhicule et le système de coordonnées universel est calculé, l'angle d'orientation entre le système de coordonnées de véhicule et le système de coordonnées universel étant calculé dans l'unité de modélisation d'orientation au moins sur la base des grandeurs suivantes:

la vitesse relativement au système de coordonnées de véhicule,
la vitesse relativement au système de coordonnées universel et
en particulier l'angle de braquage.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010063984 A1
- DE 102006029148 A2